(19) Europäisches Patentamt / European Patent Office / Office européen des brevets

(11) **EP 4 012 651 B1**

(12) **FASCICULE DE BREVET EUROPEEN**

(45) Date de publication et mention de la délivrance du brevet:
**04.02.2026 Bulletin 2026/06**

(21) Numéro de dépôt: **21212054.7**

(22) Date de dépôt: **02.12.2021**

(51) Classification Internationale des Brevets (IPC):
**G06T 7/00** *(2017.01)* **G06T 7/73** *(2017.01)*
**G06V 10/75** *(2022.01)* **G06V 10/40** *(2022.01)*
**G06V 20/64** *(2022.01)*

(52) Classification Coopérative des Brevets (CPC):
**G06T 7/75; G06V 10/40; G06V 10/7515; G06V 20/653;** G06T 2207/30164

(54) **PROCÉDÉS, PROGRAMME D'ORDINATEUR ET SYSTÈME POUR L'IDENTIFICATION, LA DÉTECTION ET LA LOCALISATION D'UNE INSTANCE D'OBJET DANS UNE SCÈNE TRIDIMENSIONNELLE**

VERFAHREN, COMPUTERPROGRAMM UND SYSTEM ZUR IDENTIFIZIERUNG, ERKENNUNG UND LOKALISIERUNG EINER OBJEKTINSTANZ IN EINER 3D-SZENE

METHODS, COMPUTER PROGRAM AND SYSTEM FOR THE IDENTIFICATION, DETECTION AND LOCATION OF AN INSTANCE OF AN OBJECT IN A THREE-DIMENSIONAL SCENE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.12.2020 FR 2012869**

(43) Date de publication de la demande:
**15.06.2022 Bulletin 2022/24**

(73) Titulaire: **Commissariat à l'Energie Atomique et aux Energies Alternatives**
**75015 Paris (FR)**

(72) Inventeurs:
• **MAYRAN DE CHAMISSO, Fabrice**
**77140 Nemours (FR)**
• **TAMAAZOUSTI, Mohamed**
**91191 Gif-sur-Yvette cedex (FR)**
• **MEDEN, Boris**
**91191 Gif-sur-Yvette cedex (FR)**

(74) Mandataire: **Bonnet, Michel**
**Cabinet Bonnet**
**93, rue Réaumur**
**75002 Paris (FR)**

(56) Documents cités:
**WO-A1-2020/065177 WO-A1-2020/201392**

• **MITRA NILOY J ET AL: "Partial and approximate symmetry detection for 3D geometry", ACM TRANSACTIONS ON GRAPHICS, ACM, NY, US, vol. 25, no. 3, 1 July 2006 (2006-07-01), pages 560 - 568, XP059141655, ISSN: 0730-0301, DOI: 10.1145/1141911.1141924**

**Description**

La présente invention concerne un procédé, un programme d'ordinateur et un système d'identification d'une instance d'un objet dans des données de représentation d'une scène tridimensionnelle à l'aide d'un descripteur. Elle concerne également un procédé de détection et de localisation tridimensionnelle d'une instance d'objet incluant l'exécution du procédé précité pour son identification.

D'une façon générale, elle s'inscrit dans le domaine industriel de la reconnaissance d'objets rigides ou quasi-rigides (i.e. non articulés), voire d'objets articulés, en vision tridimensionnelle par ordinateur. Une telle reconnaissance d'objets nécessite une comparaison des données de représentation de la scène tridimensionnelle avec celles d'au moins un modèle d'objet rigide ou quasi-rigide, voire d'un modèle d'objet légèrement articulé, ou avec celles d'une autre scène tridimensionnelle, par exemple pour une détection et localisation d'objet par recalage. Ce traitement implique la détermination d'au moins un jeu de paramètres de transformation spatiale en translation et rotation pour la mise en correspondance d'au moins une instance d'objet dans la scène tridimensionnelle avec le modèle d'objet correspondant, ou avec une autre instance d'objet correspondante dans l'autre scène tridimensionnelle. Les objets plus fortement articulés peuvent quant à eux être décomposés en plusieurs parties rigides ou quasi-rigides, de sorte que les mêmes traitements s'appliquent sur chacune d'elles, à raison par exemple d'un jeu de paramètres de transformation par partie rigide ou quasi-rigide de ces objets.

Par « modèle d'objet » dans ce contexte tridimensionnel, on entend une représentation prédéterminée d'un objet faisant référence. Elle peut consister en une représentation modélisée, par exemple par ordinateur, en trois dimensions spatiales d'un objet réel sous forme de nuage tridimensionnel de points, d'ensemble maillé de faces (de l'anglais « mesh ») ou de toute autre représentation mathématique (explicite, implicite, paramétrique, etc.) pouvant être convertie en un nuage tridimensionnel de points. Elle peut aussi être issue d'une capture de scène réelle, à l'aide d'un ou plusieurs capteurs, dans laquelle la représentation de l'objet en nuage tridimensionnel de points et sa disposition sont suffisamment contrôlées pour faire référence. Par « instance d'objet » dans une scène tridimensionnelle, on entend une représentation comparable d'un objet dans cette scène tridimensionnelle, c'est-à-dire une représentation modélisée sous forme de nuage tridimensionnel de points, d'ensemble maillé de faces ou de toute autre représentation mathématique pouvant être convertie en un nuage tridimensionnel de points. Ces représentations peuvent en outre comporter d'autres informations que les points, comme par exemple des informations de couleurs.

Les applications industrielles concrètes sont multiples et dépassent la détection et la localisation d'objets. Elles incluent de façon non exhaustive :

- la localisation tridimensionnelle, par exemple en réalité virtuelle, augmentée ou mixte, d'un système tel qu'un véhicule, notamment un véhicule autonome, un piéton, un robot ou un dispositif portatif, par des techniques de cartographie et localisation simultanées (de l'anglais « Simultaneous Localization And Mapping »),

- la reconstruction tridimensionnelle d'une scène par fusion de données à partir d'observations partielles complémentaires,

- le recalage d'un modèle dans une scène,

- la classification d'objets présents dans une scène,

- la reconstruction tridimensionnelle de scène par recalage tridimensionnel d'une scène sur une autre, l'une de ces deux scènes faisant référence,

- l'analyse d'une scène tridimensionnelle incluant une reconnaissance et une localisation d'objets dans cette scène,

- l'identification de points d'intérêts dans une scène (par exemple des points présentant une courbure particulière),

- la segmentation de surfaces dans une scène selon un critère de similarité,

- l'inspection automatique en temps réel d'objets fabriqués industriellement, en particulier pour une recherche de défauts en contrôle qualité,

- la préhension robotique et la manipulation robotisée d'objets dans l'espace, à l'aide notamment d'au moins un bras articulé industriel et/ou dans une chaîne d'assemblage par exemple.

La dernière application inclut notamment le dévracage (de l'anglais « bin picking ») consistant à reconnaître puis déplacer successivement ou simultanément, à l'aide d'un ou plusieurs bras de robots, des objets en vrac dans une chaîne de production ou dans un lieu de stockage.

Le principe de la reconnaissance et de la localisation d'objet par recalage rigide sur un modèle, ou par comparaison de données de représentations de scènes, est très étudié dans l'état de la technique. Selon une chaîne de traitement bien établie et enseignée par exemple dans le document de brevet US 8,830,229 B2, il comporte les étapes suivantes :

- obtention de jeux de paramètres de transformation en translation et rotation pour des mises en correspondance tridimensionnelle respectives de points particuliers de chaque instance supposée d'un objet dans la scène tridimensionnelle avec leurs dispositions dans un modèle tridimensionnel correspondant ou dans une autre instance d'objet correspondante dans une autre scène tridimensionnelle,

- à partir de ces jeux de paramètres point à point et si au moins une instance d'objet est effectivement présente dans la scène tridimensionnelle, détermination, par regroupement(s) de ces jeux de paramètres point à point, d'au moins un jeu de paramètres de transformation en translation et rotation pour la mise en correspondance tridimensionnelle d'au moins une instance d'objet de la scène tridimensionnelle avec au moins un modèle d'objet tridimensionnel ou au moins une autre instance d'objet d'une autre scène tridimensionnelle, et

- de façon optionnelle, vérification et raffinement de la ou des transformations déterminées.

En ce qui concerne la première étape, elle consiste généralement à prétraiter les données de représentation de la scène tridimensionnelle obtenues par un ou plusieurs capteurs, à sélectionner des points particuliers d'intérêt à mettre en correspondance dans la scène et dans le modèle ou dans l'autre scène, à calculer les valeurs prises par des descripteurs locaux ou globaux destinés à être associés à ces points particuliers sélectionnés pour faciliter et améliorer la mise en correspondance, puis à réaliser la mise en correspondance proprement dite. Cette première étape peut d'ailleurs être mise en œuvre dans des applications autres que la détection, la reconnaissance ou la localisation d'objet par recalage.

Elle comporte l'exécution d'un procédé d'identification d'une instance d'un objet dans des données de représentation d'une scène tridimensionnelle à l'aide d'un descripteur, comportant les étapes suivantes :

- sélection d'au moins un point représentatif de l'instance d'objet dans les données de représentation ;

- calcul d'une pluralité de valeurs identifiantes prises par des paramètres du descripteur pour chaque point représentatif sélectionné ; et

- ajout des valeurs identifiantes calculées en chaque point représentatif sélectionné à des données d'identification de l'instance d'objet.

Chaque point représentatif de l'instance d'objet peut être un point d'une surface de l'instance d'objet. Il peut également s'agir d'un point représentatif de l'instance d'objet, et même plus précisément de sa surface, sans qu'il soit lui-même sur cette surface, comme par exemple un point d'un axe principal ou autre de l'objet.

De même, il est habituel de calculer les valeurs de paramètres du descripteur pour chaque point représentatif sélectionné dans un repère local déterminé en ce point. Mais ce repère local peut être implicite, voire non déterminé, cela dépendant en fait de la définition du descripteur.

Le choix d'un descripteur, qu'il soit local ou global, ainsi que la façon de l'évaluer et de comparer les valeurs qu'il prend sont déterminants sur la pertinence des paramètres de transformation obtenus et le succès de la mise en correspondance. D'une façon plus générale et au-delà de l'application précitée, ils ont également un impact majeur sur la complexité et le temps de traitement des données. La qualité d'un descripteur est par ailleurs un critère d'autant plus important qu'il peut aussi être souhaité de l'utiliser pour la sélection elle-même des points d'intérêt sachant que ces points d'intérêt sont avantageusement ceux possédant des valeurs de descripteur facilement reconnaissables et/ou très discriminantes.

Aucun descripteur, aussi complexe soit-il, ne peut pourtant être complètement discriminant, d'une part parce que certains objets présentent des symétries ou pseudo-symétries, d'autre part parce qu'il existe toujours des invariances dans un objet pour un descripteur donné, qu'il soit local ou global. Des invariances d'un objet sont des zones différentes de cet objet pouvant être considérées comme identiques du point de vue du descripteur à une transformation près en rotation, translation, échelle ou selon une autre caractéristique décrite par le descripteur. Notamment, il est courant qu'un objet présente des portions sphériques, cylindriques ou planes, qui sont par nature sources d'invariances.

Un exemple de descripteur permettant une identification surfacique simple, discriminante, robuste et pouvant être envisagé comme descripteur local ou global est par exemple donné dans le document de brevet WO 2020/201392 A1. N'impliquant pas nécessairement de calculs statistiques, ce descripteur est en outre tout à fait adapté à une comparaison de ses valeurs par calculs de distances euclidiennes et aux méthodes de recherches rapides connues. Cependant, comme tous les autres descripteurs, il n'échappe pas aux ambiguïtés de mises en correspondance dues aux invariances des objets auxquels il s'applique, en plus de celles dues au bruit, aux différentes instances d'un même objet dans une scène et autres difficultés pouvant perturber ces mises en correspondance.

En ce qui concerne les deuxième et troisième étapes, elles font l'objet de nombreuses recherches et propositions de solutions dans l'état de la technique.

Une solution astucieuse pour la deuxième étape est par exemple introduite dans le document de brevet WO 2020/065177 A1. Elle propose une expression de chaque jeu de paramètres de transformation dans un système de coordonnées facilitant les calculs de distances et de moyennes pour un regroupement (de l'anglais « clustering ») automatique facilité et optimisé de ces jeux de paramètres de transformation en un ou plusieurs groupe(s) (de l'anglais « cluster(s) »), dans une finalité de mise en correspondance entre instances et modèles d'objets. Elle est en outre particulièrement bien adaptée au descripteur du document WO 2020/201392 A1.

Une solution communément choisie pour la troisième étape est la méthode ICP (de l'anglais « Iterative Closest Point »), enseignée dans l'article de Besl et al, intitulé « A method for registration of 3-D shapes », publié dans IEEE Transactions on Pattern Analysis and Machine Intelligence, volume 14, n° 2, février 1992, pages 239 à 256. Elle aboutit à une très bonne convergence locale, mais dépend très fortement des conditions initiales, lesquelles peuvent donc avantageusement résulter de la deuxième étape lorsque celle-ci est bien menée.

Quelles que soient les méthodes algorithmiques employées pour l'une ou plusieurs des trois étapes précitées, le choix du procédé exécuté pour identifier une instance d'un objet à l'aide d'un descripteur est central. Les symétries et autres invariances pourtant inévitables d'objets conduisent la plupart du temps à proposer des descripteurs qui cherchent à les éliminer. En conséquence, les nombreux documents de l'état de l'art s'évertuent à développer des descripteurs complexes très discriminants dans la plupart des cas, tout en oubliant que certaines surfaces, par exemple des surfaces parfaitement sphériques, cylindriques ou planes, restent toujours invariantes quel que soit le descripteur choisi et sa complexité.

Certains documents détectent spécifiquement les symétries ou invariances, mais :

- soit pour les écarter de la description de l'objet et donc de son identification, comme par exemple dans l'article de Alexandrov et al, intitulé « Leveraging symmetries to improve object detection and pose estimation from range data », publié dans Proceedings of International Conference on Computer Vison Systems 2019, pages 397-407,

- soit pour traiter et transformer l'objet en vue de le rendre symétrique, comme par exemple dans le document de brevet US 8,411,081 B2.

Dans les documents WO 2020/065177 A1 et WO 2020/201392 A1, bien que les méthodes de description et de classification par regroupement(s) qui y sont enseignées coopèrent avantageusement pour détecter, identifier et localiser des instances d'objets, les symétries et invariances ajoutent une ambiguïté non résolue dans le traitement des données.

Il peut ainsi être souhaité de prévoir un procédé d'identification d'une instance d'un objet qui permette de s'affranchir d'au moins une partie des problèmes et contraintes précités.

Il est donc proposé un procédé d'identification d'une instance d'un objet dans des données de représentation d'une scène tridimensionnelle à l'aide d'un descripteur, comportant les étapes suivantes :

- sélection d'au moins un point représentatif de l'instance d'objet dans les données de représentation ;

- calcul d'une pluralité de valeurs identifiantes prises par des paramètres du descripteur pour chaque point représentatif sélectionné ;

- ajout des valeurs identifiantes calculées en chaque point représentatif sélectionné à des données d'identification de l'instance d'objet ;

- recherche d'au moins une éventuelle invariance par transformation en translation et/ou en rotation d'au moins un modèle de l'objet dans des données de représentation d'au moins une scène de référence incluant ce modèle, pour l'obtention d'informations d'invariance relatives à chaque invariance trouvée ; et

- ajout desdites informations d'invariance aux données d'identification de l'instance d'objet.

Ainsi, sur la base du constat que l'information potentiellement manquante dans un descripteur quel qu'il soit, ou

que l'ambiguïté inhérente à une propriété de symétrie d'un objet, est compensée par l'analyse des invariances dans un modèle de cet objet, et inversement, la présente invention propose astucieusement d'ajouter ces informations d'invariance aux données d'identification de l'instance d'objet, plutôt que de les écarter ou de les utiliser à une autre fin. Il en résulte une identification plus complète de l'instance d'objet qui permet d'envisager de meilleurs recalages tridimensionnels, recherches de défauts, ou autres applications en vision par ordinateur.

En conséquence également, la présente invention permet d'utiliser un descripteur simple et de faible dimensionnalité tel que celui du document WO 2020/201392 A1 et d'y ajouter les informations d'invariance pour récupérer l'information perdue plutôt que de tenter de développer des descripteurs toujours plus complexes. Ce complément d'informations d'invariance s'avère en outre particulièrement adapté lui aussi au système de coordonnées proposé dans le document WO 2020/065177 A1 pour exprimer chaque jeu de paramètres de transformation dans une application de recalage tridimensionnel.

De façon optionnelle :

- la recherche d'au moins une éventuelle invariance comporte les étapes suivantes :

  • obtention de jeux de paramètres de transformation en translation et rotation pour une mise en correspondance tridimensionnelle respective d'au moins un point représentatif d'un premier modèle de l'objet dans des données de représentation d'une première scène de référence incluant ce premier modèle avec au moins un point représentatif d'un deuxième modèle de l'objet dans des données de représentation d'une deuxième scène de référence incluant ce deuxième modèle, à l'aide desdits paramètres du descripteur, et
  • expression de chaque jeu de paramètres de transformation dans un système de coordonnées à plusieurs dimensions incluant au moins une dimension pour la translation et au moins une dimension pour la rotation, pour l'obtention d'un motif d'invariance de l'objet ; et

- l'ajout desdites informations d'invariance comporte l'ajout du motif d'invariance obtenu aux données d'identification de l'instance d'objet.

De façon optionnelle également, l'obtention des jeux de paramètres de transformation en translation et rotation est réalisée à l'aide desdits paramètres du descripteur dont les valeurs sont calculées respectivement en chaque point représentatif des premier et deuxième modèles.

De façon optionnelle également, la recherche d'au moins une éventuelle invariance comporte en outre un regroupement automatique desdits jeux de paramètres de transformation, chaque groupe éventuellement obtenu étant représentatif d'une invariance par translation et/ou rotation de l'objet et d'un unique jeu de paramètres de transformation pour une mise en correspondance du premier modèle de l'objet avec le deuxième modèle de l'objet.

De façon optionnelle également :

- les données de représentation du deuxième modèle de l'objet dans la deuxième scène de référence sont obtenues par ajout d'un bruit prédéterminé dans les données de représentation du premier modèle de l'objet dans la première scène de référence ; et/ou

- le deuxième modèle de l'objet tel que représenté dans la deuxième scène de référence résulte d'une déformation et/ou d'une transformation en translation et/ou rotation du premier modèle de l'objet tel que représenté dans la première scène de référence.

De façon optionnelle également, un score de potentiel désambiguïsant est calculé en au moins une zone dudit au moins un modèle de l'objet par combinaison de scores d'invariance calculés pour chaque invariance trouvée dans cette zone.

Il est également proposé un procédé de détection et de localisation tridimensionnelle d'une instance d'un objet dans des données de représentation d'une scène tridimensionnelle par comparaison avec un modèle de l'objet dans des données de représentation d'une scène de référence incluant ce modèle, comportant les étapes suivantes :

- exécution d'un procédé d'identification tel que défini précédemment, pour l'identification de l'instance d'objet ;

- obtention de jeux de paramètres de transformation en translation et rotation pour des mises en correspondance tridimensionnelle respectives de chaque point représentatif de l'instance d'objet dans la scène tridimensionnelle avec une disposition possible de ce point représentatif dans le modèle ;

- regroupement automatique desdits jeux de paramètres de transformation, chaque groupe éventuellement obtenu étant représentatif d'un unique jeu de paramètres de transformation pour une mise en correspondance de l'instance d'objet avec son modèle ; et

- sélection d'un unique groupe parmi le(s) groupe(s) obtenu(s) à l'aide des informations d'invariance.

De façon optionnelle, la sélection d'un unique groupe, parmi le(s) groupe(s) obtenu(s) à l'aide des informations d'invariance, comporte la prise en compte d'un score désambiguïsant pour chaque mise en correspondance de l'instance d'objet avec son modèle.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé d'identification tel que défini précédemment ou pour l'exécution des étapes d'un procédé de détection et de localisation tridimensionnelle tel que défini précédemment, lorsque ledit programme est exécuté sur un ordinateur.

Il est également proposé un système d'identification d'une instance d'un objet dans des données de représentation d'une scène tridimensionnelle à l'aide d'un descripteur, le système comportant :

- au moins une mémoire de stockage des données de représentation de la scène tridimensionnelle, de paramètres du descripteur et de données de représentation d'au moins une scène de référence incluant au moins un modèle de l'objet ; et

- un processeur d'identification de l'instance d'objet dans la scène tridimensionnelle, programmé pour l'exécution des étapes d'un procédé d'identification tel que défini précédemment.

L'invention sera mieux comprise à l'aide de la description qui va suivre, donnée uniquement à titre d'exemple et faite en se référant aux dessins annexés dans lesquels :

[Fig.1] la figure 1 représente schématiquement un exemple de représentation numérique en imagerie tridimensionnelle de plusieurs modèles d'objets,

[Fig.2] la figure 2 représente schématiquement un exemple de représentation numérique en imagerie tridimensionnelle d'une scène tridimensionnelle comportant plusieurs instances d'objets,

[Fig.3] la figure 3 représente schématiquement la structure générale d'un système de détection et de localisation tridimensionnelle d'au moins une instance d'objet dans des données de représentation de scène tridimensionnelle telles que celles de la figure 2, incluant un système d'identification d'instance d'objet selon un mode de réalisation de l'invention,

[Fig.4] la figure 4 illustre les étapes successives d'un procédé de détection et de localisation tridimensionnelle d'au moins une instance d'objet mis en œuvre par le système de la figure 3, incluant une identification de chaque instance d'objet présente dans la scène tridimensionnelle de la figure 2 et de chaque modèle d'objet de la figure 1, selon un mode de réalisation de l'invention,

[Fig.5] la figure 5 illustre un premier exemple de modèle d'objet et de motif d'invariance associé tel qu'il peut être obtenu par une identification d'objet selon la présente invention,

[Fig.6] la figure 6 illustre un deuxième exemple de modèle d'objet et de motif d'invariance associé tel qu'il peut être obtenu par une identification d'objet selon la présente invention,

[Fig.7] la figure 7 illustre un troisième exemple de modèle d'objet et de motif d'invariance associé tel qu'il peut être obtenu par une identification d'objet selon la présente invention,

[Fig.8] la figure 8 illustre un mode de réalisation préféré d'une étape de regroupement de motif d'invariance obtenu par une identification d'objet selon la présente invention,

[Fig.9] la figure 9 illustre le motif d'invariance de la figure 7 tel que simplifié par regroupement selon le mode de réalisation préféré de la figure 8,

[Fig.10] la figure 10 illustre le modèle d'objet de la figure 7 sur lequel est calculé un score de potentiel désambiguïsant en chaque point grâce au motif d'invariance qui peut lui être associé,

[Fig.11] la figure 11 illustre le modèle d'objet de la figure 6 sur lequel est calculé un score de potentiel désambiguïsant en chaque point grâce au motif d'invariance qui peut lui être associé,

[Fig. 12] la figure 12 illustre le résultat d'un exemple d'exploitation de motif d'invariance d'objet dans l'exécution du procédé de détection et localisation de la figure 4.

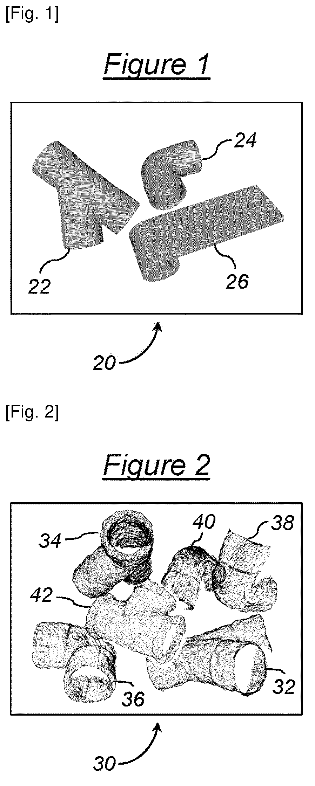

L'ensemble 20 de modèles tridimensionnels représenté sur la figure 1 est une scène de référence artificielle constituée de plusieurs modèles d'objets artificiels. Il pourrait aussi s'agir d'une scène de référence réelle constituée de modèles d'objets réels dont la disposition est connue et maîtrisée. Il est ici constitué de trois modèles d'objets choisis à titre d'exemple illustratif. Un premier modèle tridimensionnel 22 représente un raccord de tuyau en T incliné. Un deuxième modèle tridimensionnel 24 représente un raccord de tuyau en coude. Un troisième modèle tridimensionnel 26 représente un profilé à enroulement de l'une de ses extrémités. Ces trois modèles d'objets sont disposés et parfaitement localisables dans un référentiel tridimensionnel lié à l'ensemble 20. Ils sont représentés comme indiqué précédemment sous forme de nuage tridimensionnel de points, d'ensemble maillé de faces ou de toute autre représentation mathématique pouvant être convertie en un nuage tridimensionnel de points. Pour des raisons de clarté évidentes, les modèles 22, 24 et 26 sont bien séparés les uns des autres dans l'ensemble 20. Mais ils pourraient avantageusement être superposés en étant tous centrés dans l'ensemble 20, tout en restant distinguables à l'aide de labels distinctifs associés aux points qui les constituent. Avantageusement, leur échantillonnage est le même ou au moins similaire. Dans un cas simple, l'ensemble 10 pourrait ne comporter qu'un seul modèle tridimensionnel.

La scène tridimensionnelle 30 représentée sur la figure 2 est l'illustration de ce qui peut résulter d'une capture tridimensionnelle obtenue à l'aide d'un capteur 3D d'une scène réelle. Elle est constituée de points tridimensionnels ou « points 3D » d'un référentiel qui lui est propre, indiquant chacun par une information de nuance de gris ou de couleur la présence d'instances réelles d'objets dans la scène réelle. On y distingue ici, à titre d'exemple illustratif deux instances d'objets 32 et 34 correspondant au modèle de raccord de tuyau en T incliné 22, trois instances d'objets 36, 38 et 40 correspondant au modèle de raccord de tuyau en coude 24, une instance d'objet 42 de type raccord de tuyau en T droit n'ayant pas de modèle correspondant dans l'ensemble 20 et aucune instance d'objet correspondant au modèle de profilé 26. On remarquera que certaines instances d'objets de la scène 30 peuvent n'être que partiellement visibles.

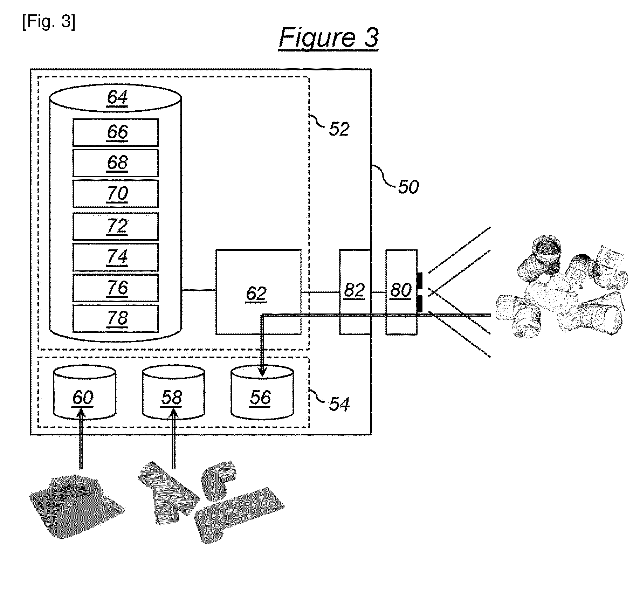

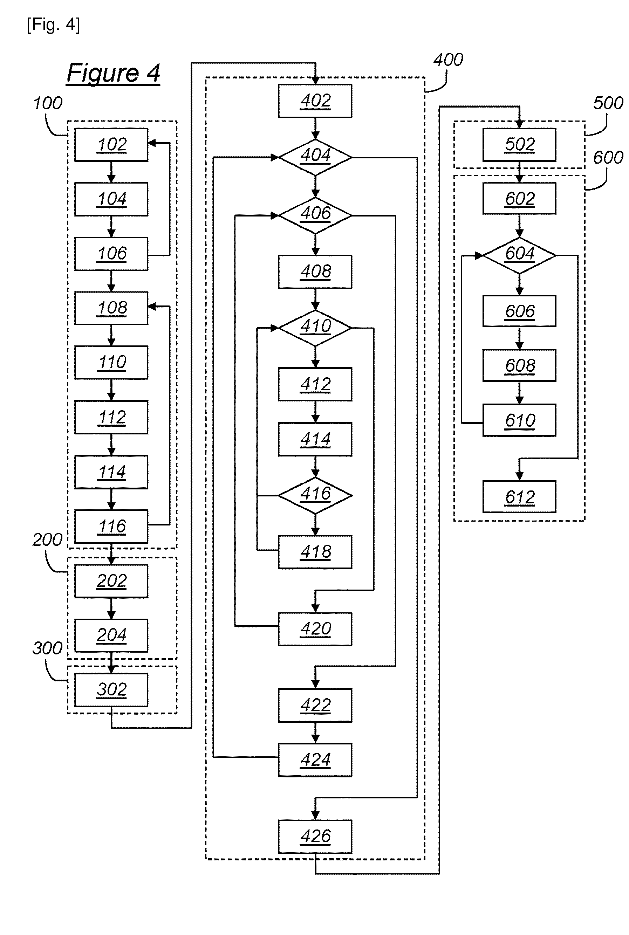

Conformément à un système/procédé de détection et de localisation tridimensionnelle des instances d'objets 32 à 42 dans des données de représentation de la scène tridimensionnelle 30, par comparaison avec les modèles d'objets 22, 24 et 26 dans des données de représentation de l'ensemble 20, tel que celui qui va être détaillé en références aux figures 3 et 4, une correspondance doit pouvoir être établie entre chaque instance d'objet pouvant être identifiée et reconstruite dans la scène tridimensionnelle 30 et l'un des modèles 22, 24 et 26. Cette correspondance consiste à retrouver les paramètres d'une transformation rigide en translation, en rotation, et éventuellement en changement d'échelle (agrandissement ou réduction de taille), qui permet le cas échéant de passer du positionnement de chaque instance d'objet dans la scène 30 vers celui de son modèle dans l'ensemble 20, ou inversement, du positionnement de chaque modèle dans l'ensemble 20 vers celui d'une instance d'objet qui lui correspond dans la scène 30. On rappellera toutefois que l'exemple illustré par les figures 3 et 4 ne concerne qu'une famille particulière d'applications possibles de la présente invention, celle de la détection et la localisation d'objet dans une scène tridimensionnelle, l'invention s'étendant à des applications au-delà de cette famille particulière.

Le système 50 de détection et de localisation tridimensionnelle des instances d'objets 32 à 42, tel que représenté schématiquement sur la figure 3, comporte une unité de traitement 52 associée de façon classique à une mémoire 54 (par exemple une mémoire RAM). Cette mémoire 54 stocke par exemple notamment des données 56 de représentation de la scène 30, des données 58 de représentation de l'ensemble 20 de modèles tridimensionnels et des paramètres 60 d'un descripteur tel que par exemple celui défini dans le document WO 2020/201392 A1.

L'unité de traitement 52 peut être mise en œuvre dans un dispositif informatique tel qu'un ordinateur classique comportant un processeur associé à une ou plusieurs mémoires pour le stockage de fichiers de données et de programmes d'ordinateurs. L'unité de traitement 52 peut alors elle-même être considérée comme formée d'un processeur 62 de mise en correspondance d'instances et de modèles d'objets associé à une mémoire 64 de stockage des instructions qu'il exécute sous forme de programmes d'ordinateurs. Lorsqu'au moins une partie des instructions peut être exécutée en parallèle, le processeur peut être optionnellement adapté pour un tel parallélisme, par exemple sous la forme d'un processeur GPU (de l'anglais « Graphics Processing Unit »).

Parmi ces programmes d'ordinateurs, un premier programme 66 est par exemple conçu pour l'exécution d'une identification des instances d'objets de la scène tridimensionnelle 30 à l'aide du descripteur défini au moins en partie par les paramètres 60 stockées dans la mémoire 54. Cette identification consiste à calculer des valeurs identifiantes que prend le descripteur en plusieurs points représentatifs à sélectionner pour chaque instance d'objet considérée. Ce même premier programme 66 permet également une identification similaire des modèles d'objets de l'ensemble 20. Un deuxième programme 68 est par exemple conçu pour l'exécution d'un complément d'identification des instances d'objets de la scène tridimensionnelle 30 spécifique à la présente invention. C'est son fonctionnement, combiné à celui du premier programme 66, qui fait l'objet principal de la présente invention, par une recherche astucieuse d'éventuelles invariances par transformation en translation et/ou en rotation des modèles de l'ensemble 20, pour la fourniture d'informations d'invariance. Ces deux programmes 66, 68 associés au processeur 62 dans l'unité de traitement 52 et à la mémoire 54 constituent un système d'identification d'instance d'objet selon la présente invention.

Un troisième programme 70 est par exemple conçu pour l'exécution d'une méthode d'obtention de jeux de paramètres de transformation en translation, rotation et éventuellement changement d'échelle pour des mises en correspondance tridimensionnelle respectives des points représentatifs sélectionnés d'instances d'objets dans la scène tridimensionnelle 30 avec leurs dispositions possibles dans l'un des modèles de l'ensemble 20. Une telle méthode est connue et ne sera pas détaillée. Elle est basée sur une mise en correspondance des valeurs que prend le descripteur en ces points dans les deux représentations. Elle fonctionne d'autant mieux que le descripteur est discriminant. De façon optionnelle, ce troisième programme peut en outre être conçu pour l'exécution d'un premier traitement sur les jeux de paramètres de transformation obtenus, de manière notamment à optimiser leur expression par transcodage en vue d'un regroupement automatique à réaliser dans un espace approprié de représentation de ces paramètres. Il peut notamment s'agir d'exprimer chaque jeu de paramètres de transformation dans un système de coordonnées à plusieurs dimensions incluant au moins une dimension pour la translation et au moins une dimension pour la rotation, comme cela est par exemple enseigné dans le document WO 2020/065177 A1.

Un quatrième programme 72 est par exemple conçu pour exécuter un regroupement automatique, chaque groupe éventuellement obtenu en sortie étant représentatif d'une unique instance d'objet dans la scène tridimensionnelle 30 et d'un unique jeu de paramètres de transformation pour une mise en correspondance avec un unique modèle dans l'ensemble 20. Un tel regroupement est également connu. Il peut se faire en une ou plusieurs itérations selon le nombre d'instances d'objets à localiser et la méthode employée. La méthode enseignée dans le document WO 2020/065177 A1 est par exemple avantageusement applicable. Compte tenu des invariances possibles des modèles de l'ensemble 20 au vu du descripteur utilisé, ou plus généralement au vu de leurs éventuelles symétries ou quasi-symétries, plusieurs groupes peuvent être associés à une même instance d'objet pour un même modèle : autrement dit, plusieurs jeux de paramètres de transformation impliquant plusieurs mises en correspondance différentes peuvent être trouvées pour une même instance d'objet vers un même modèle.

Un cinquième programme 74 est donc par exemple conçu pour exploiter les informations d'invariance fournies par exécution du deuxième programme 68 dans le but de sélectionner, pour chaque instance d'objet, un unique groupe parmi le(s) groupe(s) obtenu(s) par exécution du quatrième programme 72. De façon optionnelle, ce cinquième programme peut en outre être conçu pour l'exécution d'un deuxième traitement sur chaque jeu de paramètres de transformation représentatif de chaque groupe finalement sélectionné en vue de le transcoder (par exemple un transcodage inverse du premier traitement) en un jeu de paramètre exprimé selon un format souhaité en sortie. Par exemple, cette option du cinquième programme 74 peut être tout simplement conçue pour inverser le traitement de l'option correspondante du troisième programme 70.

Un sixième programme optionnel 76 est par exemple conçu pour exécuter une vérification et un raffinement de la ou des transformations déterminées par regroupement automatique. Une telle vérification optionnelle avec raffinement est également connue et ne sera pas détaillée. Elle implique par exemple la méthode ICP mentionnée précédemment.

Enfin, un septième programme optionnel 78 est par exemple conçu pour affiner ou remettre en question la sélection de groupe(s) du cinquième programme 74 en exploitant de nouveau les informations d'invariance fournies par exécution du deuxième programme 68, mais selon une logique légèrement différente.

L'unité de traitement 52 telle qu'illustrée sur la figure 3 comporte ainsi fonctionnellement sept programmes d'ordinateur ou sept fonctions d'un même programme d'ordinateur. On notera en effet que les programmes d'ordinateur 66, 68, 70, 72, 74, 76, 78 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le dispositif informatique mettant en œuvre l'unité de traitement 52 pourrait être remplacé par un dispositif électronique composé uniquement de circuits numériques (sans programme d'ordinateur) pour la réalisation des mêmes actions.

L'installation de la figure 3 peut comporter, outre le système 50 de détection et de localisation tridimensionnelle des instances d'objets 32 à 42, un capteur 3D 80 d'obtention des données de représentation de la scène tridimensionnelle 30. Un tel capteur 3D n'est pas détaillé parce qu'il est bien connu de l'homme du métier. Par généralisation, il peut être constitué d'une combinaison de plusieurs capteurs, pour plusieurs vues ou modalités de détection. Selon une variante de réalisation possible, le système 50 de détection et de localisation tridimensionnelle est autonome et distant du capteur 3D 80. Il comporte alors une interface 82 de (télé)communication avec ce capteur 3D 80, avec ou sans fil, gérée par le processeur 62 de mise en correspondance d'instances et de modèles d'objets. Selon une autre variante de réalisation possible, le système 50 pourrait être embarqué dans le capteur 3D 80 ou, réciproquement, le capteur 3D 80 pourrait être intégré dans le système 50.

Un procédé de détection et de localisation tridimensionnelle d'au moins une instance d'au moins un objet dans des données de représentation d'une scène tridimensionnelle, par comparaison avec au moins un modèle dudit au moins un objet, mis en œuvre par le système 50 de la figure 3, par exemple à l'aide de l'ensemble 20 de modèles de la figure 1 pour une analyse de la scène 30 de la figure 2, va maintenant être détaillé en référence à la figure 4.

Il comporte une première phase 100 mettant en œuvre un procédé d'identification d'instance ou de modèle d'objet mise en œuvre par le processeur 62 lorsqu'il exécute le premier programme 66 et le deuxième programme 68. Cette première phase n'a généralement pas de contrainte de calcul en temps réel lorsqu'elle procède d'une préanalyse de scène de référence ou de modèles d'objets. Elle est en revanche contrainte en calculs temps réel lorsqu'elle s'applique au traitement d'une scène réelle comportant au moins une instance d'objet.

Il comporte une deuxième phase 200 d'obtention de jeux de paramètres de transformation en translation, rotation et éventuellement changement d'échelle pour des mises en correspondance tridimensionnelle respectives des points représentatifs sélectionnés d'instances d'objets dans la scène tridimensionnelle 30 avec leurs dispositions dans l'un des modèles de l'ensemble 20. Cette deuxième phase est mise en œuvre par le processeur 62 lorsqu'il exécute le troisième programme 70.

Il comporte une troisième phase 300 de regroupement automatique pour une mise en correspondance de chaque instance d'objet identifiée dans la scène tridimensionnelle 30 avec le modèle d'objet correspondant dans l'ensemble 20 le cas échéant. Cette troisième phase est mise en œuvre par le processeur 62 lorsqu'il exécute le quatrième programme 72.

Il comporte une quatrième phase 400 de sélection, pour chaque instance d'objet, d'un unique groupe parmi le(s) groupe(s) obtenu(s) par mise en œuvre de la troisième phase, en exploitant avantageusement les informations d'invariance fournies par mise en œuvre de la première phase. Cette quatrième phase est mise en œuvre par le processeur 62 lorsqu'il exécute le cinquième programme 74.

Il comporte une cinquième phase 500 optionnelle de vérification et de raffinement de la ou des transformations déterminées par regroupement automatique. Cette cinquième phase est mise en œuvre par le processeur 62 lorsqu'il exécute le sixième programme 76.

Enfin, il comporte une sixième phase 600 optionnelle pour affiner ou remettre en question la sélection de groupe(s) de la quatrième phase 400. Cette sixième phase est mise en œuvre par le processeur 62 lorsqu'il exécute le septième programme 78.

Les phases 200 à 600, contrairement à la première, sont généralement soumises à des contraintes de temps de calcul fortes.

Le procédé d'identification mis en œuvre par la première phase 100 comporte une première étape 102 de sélection d'au moins un point représentatif d'une surface d'une instance d'objet dans les données de représentation d'une scène tridimensionnelle. Ces données de représentation sont tout d'abord par exemple converties en un nuage tridimensionnel de points situés sur la surface de l'instance d'objet considérée. Un traitement préalable du nuage de points visant à y supprimer un certain nombre d'artéfacts peut en outre être appliqué, notamment par des techniques bien connues de débruitage ou lissage. La sélection consiste à retenir au moins une partie des points de la surface. A défaut de réelle sélection, tous les points de la surface d'objet peuvent être retenus en tant que points représentatifs sélectionnés. C'est notamment possible lorsque l'on choisit un descripteur simple tel que celui du document WO 2020/201392 A1.

La première phase d'identification 100 comporte une deuxième étape 104 de détermination d'un repère local tridimensionnel en chaque point représentatif sélectionné pour une instance d'objet. Comme indiqué précédemment, il existe des méthodes connues pour définir de façon déterministe et automatique un tel repère local. Celui-ci comporte avantageusement un axe représentant la normale à la surface de l'instance d'objet au point représentatif considéré. Cette étape est optionnelle si le calcul des valeurs que prennent les paramètres du descripteur en ce point ne nécessite pas la détermination explicite d'un repère local. Elle est nécessaire dans le cas du descripteur du document WO 2020/201392 A1.

La première phase d'identification 100 comporte une troisième étape 106 de calcul de valeurs identifiantes prises par le descripteur choisi dans le repère local déterminé pour chaque point représentatif sélectionné. Les valeurs identifiantes ainsi calculées pour tous les points sélectionnés sont ajoutées à des données d'identification de l'instance d'objet.

Dans l'exemple des figures 1, 2 et 3, la première étape 102 de sélection de points représentatifs, la deuxième étape 104 de détermination des repères locaux et la troisième étape 106 de calcul des valeurs identifiantes prises par le descripteur choisi sont réalisées par exécution du premier programme 66 : en ligne avec une contrainte de calcul en temps réel pour la scène tridimensionnelle 30 incluant les instances d'objets 32, 34, 36, 38, 40, 42 et hors ligne sans contrainte de calcul en temps réel pour chaque modèle d'objet 22, 24, 26 de l'ensemble 20.

La première phase d'identification 100 comporte en outre la recherche d'au moins une éventuelle invariance par transformation en translation et/ou en rotation d'au moins l'un des modèles d'objets 22, 24, 26 de l'ensemble 20, pour l'obtention d'informations d'invariance relatives à chaque invariance trouvée.

Par exemple, pour chaque modèle d'objet 22, 24 ou 26, cette recherche d'invariance(s) peut comporter une première étape 108 d'obtention de jeux de paramètres de transformation en translation et rotation pour des mises en correspondance tridimensionnelle respectives de points représentatifs d'une première version de ce modèle d'objet 22, 24 ou 26 dans des données de représentation d'une première scène de référence incluant cette première version avec des points représentatifs d'une deuxième version de ce même modèle d'objet 22, 24 ou 26 dans des données de représentation d'une deuxième scène de référence incluant cette deuxième version, à l'aide desdits paramètres du descripteur choisi. Cette première étape 108 suppose que la boucle d'étapes 102, 104 et 106 ait été appliquée à chacune des deux versions de chaque modèle d'objet 22, 24 ou 26 à l'aide du descripteur choisi. De façon bien connue, chaque jeu de paramètres de transformation en translation et rotation obtenu est avantageusement associé à un indice de confiance (nombre réel positif par exemple compris entre 0 et 1) indiquant la qualité et/ou la robustesse de la mise en correspondance.

De façon optionnelle et avantageuse, les deux versions précitées diffèrent par l'ajout d'un bruit prédéterminé, les données de représentation de la deuxième version du modèle d'objet 22, 24 ou 26 dans la deuxième scène de référence étant obtenues par ajout de ce bruit dans les données de représentation de la première version du modèle d'objet 22, 24 ou 26 dans la première scène de référence. Cela permet d'éviter que l'étape 108 n'aboutisse qu'à un recalage du modèle d'objet sur lui-même sans aucune translation ou rotation. On notera en outre que, bien que l'étape 102 comporte un éventuel débruitage, celui-ci n'a a priori pas d'effet d'annulation de l'avantage d'introduire le bruit prédéterminé puisque la signature de ce dernier n'a aucune raison d'être adaptée à la méthode de débruitage. Cette signature est par exemple analogue à celle d'un capteur qui observerait le modèle. Elle est donc adaptable à un type de capteur.

En variante, les deux versions précitées peuvent différer par un angle de vue du modèle d'objet, y compris en ajoutant un bruit prédéterminé de capteur simulé, c'est-à-dire par une transformation en translation et/ou rotation entre les deux versions. Cela permet non seulement d'éviter que l'étape 108 n'aboutisse qu'à un recalage du modèle d'objet sur lui-même sans aucune translation ou rotation, mais également de mieux modéliser le comportement du descripteur choisi en présence d'occlusions par exemple. De façon optionnelle, un capteur réel observant une instance de référence d'un objet peut être utilisé pour acquérir des perspectives de cet objet en tant que versions différentes d'un modèle de cet objet.

En variante également, pour les objets déformables, articulés, ou ceux dont la forme et/ou l'échelle n'est connue que de façon approximative, les deux versions précitées peuvent différer par déformation(s) possible(s) de chaque objet considéré. Ces déformations sont alors échantillonnées pour éventuellement représenter toutes les configurations de déformations possibles en deux versions ou plus. En d'autres termes, la variabilité de formes possibles d'un objet peut être prise en compte dans les informations d'invariance.

En variante également, une seule version du modèle d'objet 22, 24 ou 26 pourrait être utilisée et comparée à elle-même, sans ajout de bruit, en retenant quand elles existent les n meilleures correspondances de paramètres du descripteur choisi, avec $n \geq 2$, pour éviter de ne retomber que sur un recalage du modèle d'objet sur lui-même sans aucune translation ou rotation lorsqu'il comporte au moins une autre invariance.

Suite à l'étape 108, la recherche d'invariance(s) peut comporter une deuxième étape 110 de changement de repère, pour l'expression de chaque jeu de paramètres de transformation, par exemple sous la forme d'un vecteur, dans un espace de représentation doté d'un système de coordonnées à plusieurs dimensions incluant au moins une dimension pour la translation et au moins une dimension pour la rotation, par exemple trois dimensions pour la translation et trois dimensions pour la rotation, et pour l'obtention d'un motif d'invariance de l'objet dans le repère de ce système de coordonnées. L'enseignement du document WO 2020/065177 A1 peut être avantageusement exploité à cette fin, notamment par exécution de la boucle d'étapes 104 à 116 de ce document. On notera que la représentation des informations d'invariance peut être exploitée dans d'autres référentiels que l'espace de représentation proposé dans le document WO 2020/065177 A1. Notamment, dans des environnements plus simples à seulement deux ou trois degrés de libertés, par exemple dans le cas d'objets disposés sur un plan, le système de coordonnées peut être simplifié.

Dans un souci de simplification et de manière optionnelle, le motif d'invariance obtenu peut être filtré, par exemple en supprimant les vecteurs considérés comme des données aberrantes (de l'anglais « outliers ») parce qu'ayant moins d'un nombre prédéterminé NV de voisins dans un voisinage de taille prédéterminée du système de coordonnées choisi. Selon l'enseignement du document WO 2020/065177 A1, la suppression des données aberrantes peut être accélérée par indexation des vecteurs dans un arbre de recherche tel qu'un binaire k-d avantageusement associé à une distance euclidienne.

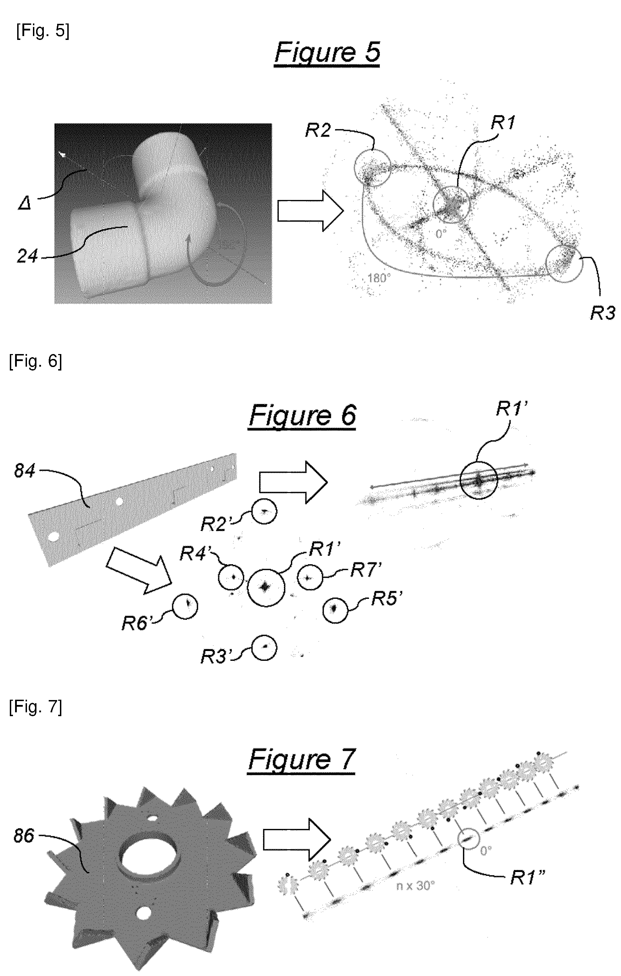

Un premier exemple de motif d'invariance pouvant être obtenu par exécution des étapes 108 et 110 est illustré sur la figure 5 pour le modèle de raccord de tuyau en coude 24. Etant donné que l'espace de représentation de ce motif d'invariance est a priori à six dimensions et que le modèle d'objet 24 présente essentiellement des symétries/invariances en rotation, seul le sous-espace des rotations est illustré en partie droite de la figure 5. On y remarque notamment bien sûr un premier regroupement R1 de vecteurs de transformations à rotation nulle (0°), indiquant le recalage du modèle sur lui-même, c'est-à-dire avec une transformation selon la fonction Identité à rotations et translations nulles, mais également deux autres regroupements R2 et R3 de vecteurs de transformations à rotations respectives de +180° et -180° autour de l'axe principal de symétrie Δ du modèle d'objet 24. On notera que le regroupement R1 est en soi une information

EP 4 012 651 B1

d'invariance puisqu'un objet dont le motif d'invariance du modèle ne présenterait que ce regroupement serait un objet ne présentant, au vu du descripteur utilisé, aucune invariance autre que celle sans transformation impliquant un simple recalage de l'objet sur lui-même sans rotation ni translation.

Un deuxième exemple de motif d'invariance pouvant être obtenu par exécution des étapes 108 et 110 est illustré sur la figure 6 pour un modèle de réglette 84 à trous et détrompeurs. Etant donné que ce modèle particulier présente des invariances (pseudo-symétries) en translation et rotation, les deux sous-espaces des translations et rotations sont illustrés respectivement en partie droite et en partie inférieure de la figure 6. On remarque dans le sous-espace des translations un motif complexe mais spécifique à la forme longitudinale du modèle de réglette 84. Un premier regroupement R1' de vecteurs de transformations à translation nulle (0°), indiquant le recalage du modèle sur lui-même sans transformation y est visible. On trouve ce premier regroupement R1' dans le sous-espace des rotations, mais entouré de six autres regroupements R2', R3', R4', R5', R6' et R7' de vecteurs de transformations à rotations respectives de +180° et -180° autour des trois axes principaux (longitudinal, latéral et transversal) du modèle de réglette 84.

Un troisième exemple de motif d'invariance pouvant être obtenu par exécution des étapes 108 et 110 est illustré sur la figure 7 pour un modèle d'objet circulaire cranté 86 présentant des invariances en rotation (deux symétries à +/- 180° et 0° et, entre ces deux symétries, dix pseudo-symétries par pas successifs de 30°). Etant donné que ce modèle particulier présente essentiellement des symétries/invariances en rotation, seul le sous-espace des rotations est illustré en partie droite de la figure 7. On y remarque notamment bien sûr un premier regroupement R1" de vecteurs de transformations à rotation nulle (0°), indiquant le recalage du modèle sur lui-même sans transformation, mais également onze autres regroupements alignés de vecteurs de transformations à rotations successives de 30° du modèle 86 sur lui-même.

Suite à l'étape 110, la recherche d'invariance(s) peut optionnellement comporter une troisième étape 112 de regroupement automatique des vecteurs de transformation, chaque groupe éventuellement obtenu étant représentatif d'une invariance par translation et/ou rotation de l'objet considéré et d'un unique jeu de paramètres de transformation pour une mise en correspondance du premier modèle de l'objet avec le deuxième modèle de l'objet. L'enseignement du document WO 2020/065177 A1 peut de nouveau être avantageusement exploité à cette fin, notamment par exécution de la boucle d'étapes 118 à 136 de ce document. Toute autre méthode de regroupement automatique connue de l'état de la technique peut également être envisagée. Le regroupement permet de discrétiser et donc simplifier le motif d'invariance en en fournissant une représentation concise, ce qui peut s'avérer très avantageux pour la suite du procédé de détection et de localisation tridimensionnelle d'instance d'objet. Un indice de confiance ou score d'invariance peut être associé à chaque groupe et résulter d'une prise en compte, par exemple une somme, des indices de confiance des vecteurs de transformation qui le composent.

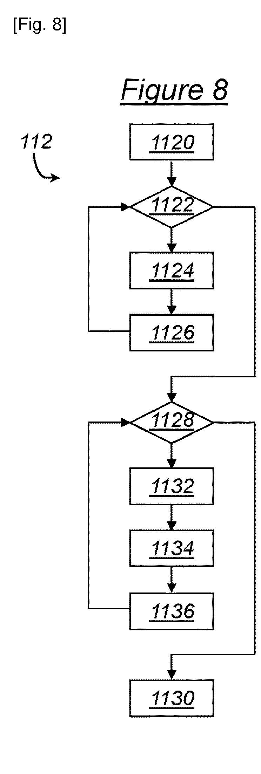

Dans un mode de réalisation préféré, le regroupement tel qu'enseigné dans le document WO 2020/065177 A1 peut être amélioré, notamment parce que la recherche d'invariance(s) n'a généralement pas de contrainte de calcul en temps réel. En effet, les groupes obtenus selon cet enseignement sont de tailles difficilement contrôlables et peuvent facilement s'étirer du fait des invariances, se scinder ou se regrouper en fonction du bruit. L'étape 112 peut alors avantageusement se décomposer en une succession d'étapes illustrées sur la figure 8. Il convient de noter que l'amélioration proposée en référence à la figure 8 est compatible avec la sortie des étapes 118 à 136 du document WO 2020/065177 A1 de sorte qu'elle peut s'y substituer dans ce document. Réciproquement, les variantes d'améliorations du regroupement proposées dans le document WO 2020/065177 A1, telles que par exemple la possibilité de réviser les scores d'invariance des groupes obtenus, sont applicables à la succession d'étapes de la figure 8.

La première étape 1120 du procédé de la figure 8 est une étape d'initialisation du regroupement automatique amélioré. Au cours de cette étape, le nombre N de groupes est initialisé à 0. Un rayon de recherche RS est prédéterminé dans l'espace de représentation des vecteurs de transformation pour définir a priori la taille des groupes et leur forme en hypersphère. Un nombre maximal Nm de groupes est imposé. Enfin, une fraction minimale Fc des vecteurs de transformation dont le regroupement est souhaité est également imposée. Cette fraction Fc peut être exprimée en nombre minimal de vecteurs de transformation à regrouper sur l'ensemble des vecteurs de transformation calculés, ou en somme minimale d'indices de confiance de vecteurs de transformation à regrouper sur la somme totale des indices de confiance des vecteurs de transformation calculés.

L'étape 1120 est suivie d'une boucle d'étapes 1122 à 1126 réalisée pour déterminer un score à affecter à chaque vecteur qui n'a pas été considéré comme une valeur aberrante.

La première étape 1122 de cette boucle d'étapes est un test réalisé pour savoir s'il reste encore au moins un vecteur de transformation, non considéré comme une valeur aberrante, à évaluer. Si oui, un tel vecteur de transformation est sélectionné et le procédé passe à une deuxième étape 1124 de la boucle d'étapes. Si non, il passe à une étape 1128 de sortie de la boucle d'étapes.

L'étape 1124 consiste à déterminer, dans l'espace de représentation choisi, quels sont les vecteurs de transformation associés au même modèle d'objet qui sont situés à l'intérieur de l'hypersphère de rayon RS dont le centre est le vecteur sélectionné et à stocker cette information de voisinage en mémoire 54.

Ensuite, au cours d'une étape 1126, la somme des indices de confiance de ces vecteurs de transformation voisins est calculée et ajoutée à l'indice de confiance du vecteur de transformation sélectionné pour former son score. Le procédé retourne à l'étape 1122.

L'étape 1128 est un test réalisé pour savoir si le nombre maximal Nm de groupes ou si la fraction minimale Fc des vecteurs de transformation dont le regroupement est souhaité est atteinte. Si oui, le procédé passe à une dernière étape 1130 de sortie de l'étape 112, lors de laquelle jusqu'à Nm groupes hypersphériques de même taille RS sont fournies avec leurs scores d'invariance calculés comme dans le document WO 2020/065177 A1. Si non, il passe à une étape 1132 consistant à sélectionner le vecteur de transformation avec le meilleur score.

Suite à l'étape 1132, un nouveau groupe centré sur le vecteur sélectionné est créé au cours d'une étape 1134. Le nombre N de groupes est incrémenté d'une unité et la fraction de vecteurs de transformation classés dans ces groupes est mise à jour pour y intégrer le vecteur sélectionné et ses voisins tels qu'identifiés à l'étape 1124.

Ensuite, au cours d'une étape 1136, pour tous les vecteurs voisins du vecteur sélectionné à l'étape 1132, leur score est soustrait de celui de leurs voisins respectifs pour neutraliser toute possibilité de créer un nouveau groupe hypersphérique dans le voisinage de celui qui vient d'être créé. Le procédé retourne à l'étape 1128 pour créer un nouveau groupe ou s'arrêter.

On notera que les paramètres RS, Nm et Fc du procédé de la figure 8 peuvent être choisis spécifiquement en fonction du contexte applicatif concerné. Le procédé de la figure 8 peut également être exécuté sur plusieurs jeux de ces paramètres, celui fournissant le meilleur score moyen étant finalement sélectionné.

On notera également qu'en cas de mémoire 54 insuffisante, l'étape 1124 peut aussi être réalisée si besoin avant chaque exécution de l'étape 1132 avec l'utilisation avantageuse d'une mémoire cache pour stocker les informations de voisinages. Si la mémoire cache est pleine, certaines informations de voisinages peuvent être éliminées pour devoir être recalculées ultérieurement.

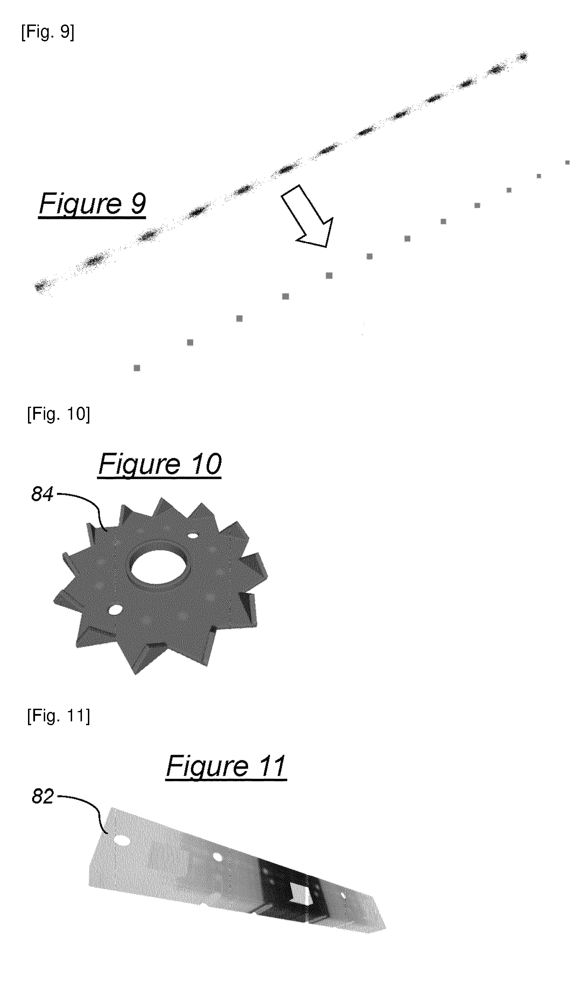

Un exemple de résultat du procédé de regroupement amélioré de la figure 8 est illustré sur la figure 9 pour l'objet circulaire cranté 86 de la figure 7 dans le sous-espace des rotations. On y constate un regroupement très simplifié en douze groupes hypersphériques correspondant aux douze rotations à 30° de l'objet sur lui-même. Les deux groupes correspondant aux deux rotations à +/- 180° et 0° présentent les meilleurs scores d'invariance, tandis que les dix autres, correspondant à des pseudo-symétries, ont des scores d'invariance moins bons.

Suite à l'étape 112, la recherche d'invariance(s) peut optionnellement comporter une quatrième étape 114 de calcul de score de potentiel désambiguïsant en au moins une zone du modèle d'objet considéré par combinaison de scores d'invariance calculés pour chaque invariance trouvée dans cette zone.

Ce calcul de score de potentiel désambiguïsant se fait en chacune de plusieurs particularités (de l'anglais « features ») de la zone considérée du modèle d'objet, Ces particularités étant par exemple des points, des contours bidimensionnels, des contours tridimensionnels ou « edgelets », des valeurs d'un descripteur en plusieurs points, etc. du modèle d'objet. Par exemple, la zone considérée peut concerner le modèle d'objet dans son intégralité et les particularités peuvent être tous les points du modèle d'objet.

Un mode de réalisation préféré consiste par exemple à :

- calculer, pour chaque particularité, un score correspondant à la différence entre cette particularité dans le modèle d'objet transformé éventuellement bruité et la particularité la plus proche dans le modèle non transformé, pour chaque groupe de transformation obtenu à l'étape 112, puis

- additionner, pour chaque particularité, les scores calculés pour tous les groupes de transformation pour obtenir, pour chaque particularité, le score de potentiel désambiguïsant souhaité.

Dans le cas où les particularités sont des contours bi- ou tridimensionnels, le score à calculer pour chaque groupe de transformation est par exemple basé sur une comparaison en termes de distance et direction entre chaque contour considéré du modèle d'objet transformé et le contour le plus proche du modèle d'objet non transformé.

Dans le cas où les particularités sont des points de surface, le score à calculer pour chaque groupe de transformation est par exemple la distance entre chaque point considéré du modèle d'objet transformé et le point le plus proche du modèle d'objet non transformé, pondérée éventuellement par la valeur absolue du produit scalaire des normales lorsque chaque point est orienté et défini en couple avec sa normale à la surface d'objet.

En représentation mathématique, si on note $\{C_i\}$, $1 \leq i \leq N$, l'ensemble des groupes de transformation $T_i$ obtenus à l'étape 112 et $\{S_i\}$, $1 \leq i \leq N$, leurs scores d'invariance respectifs, si on note $F_j = (P_j, n_j)$ les particularités formées de couples de points et de leurs normales vectorielles dans le modèle d'objet et $F_j^i = \left( P_j^i, n_j^i \right)$ les particularités respectivement les plus proches dans le modèle d'objet transformé par la transformation $T_i$, alors on note $d_j^i$ la distance entre $P_j$ et $P_j^i$ et une implémentation préférée des calculs propose l'équation suivante pour déterminer le score de potentiel désambiguïsant $S(P_j)$ pour chaque point $P_j$ :

[Math. 1]

$$S(P_j) = \sum_i \left( 1 - \left( 1 - \frac{\min(d_j^i, d_M)}{d_M} \right) \cdot abs(n_j^i \cdot n_j) \right) \cdot \frac{S_i}{\sum_k S_k}$$

où la fonction min() retourne le minimum entre deux valeurs, la fonction abs() est la valeur absolue et la constante $d_M$ est la distance maximale tolérée compte tenu de l'échantillonnage spatial d'image et du bruit de capteur éventuel. Une valeur possible pour $d_M$ est dix fois la valeur d'échantillonnage.

Ce score de potentiel désambiguïsant est proche de 0 (sombre) pour les points peu désambiguïsants et proche de 1 (clair) pour les points désambiguïsants en termes de distance ou d'angle de normales.

A titre d'exemple, la figure 10 illustre la valeur du score de potentiel désambiguïsant en chaque point de l'objet circulaire cranté 86 de la figure 7. La figure 11 illustre la valeur du score de potentiel désambiguïsant en chaque point du modèle de réglette 84 à trous et détrompeurs de la figure 6. On y voit que ce score est très révélateur de défauts, détrompeurs ou autres détails rompant les ambiguïtés et symétries d'un objet. Dans un contexte de localisation tridimensionnelle, la désambiguïsation permet d'assurer une localisation correcte d'objets essentiellement symétriques avec seulement quelques éléments distinctifs tels que des détrompeurs par exemple. Elle peut également être avantageusement utilisée pour d'autres tâches, notamment la recherche de défauts, ou l'assistance à un opérateur agissant sur un objet en attirant son attention sur les détails importants.

Suite aux étapes 108, 110, 112 (optionnelle) et 114 (optionnelle) de recherche d'invariance(s), les informations du motif d'invariance obtenu sont associées au modèle d'objet correspondant lors d'une étape 116. Elles peuvent être ajoutées aux données d'identification d'une instance d'objet quelconque à partir du moment ou un lien est établi entre cette instance et le modèle correspondant. Elles complètent ainsi avantageusement de façon globale et canonique l'identification qui peut être faite de cette instance d'objet par le descripteur choisi, de sorte que le motif d'invariance peut être considéré comme un descripteur global canonique d'invariance complémentaire du descripteur choisi.

La complémentarité s'explique de la façon suivante :

- si le descripteur choisi décrit une zone non ambiguë d'une instance d'objet dans une scène, alors les correspondances impliquant ce descripteur seront bien localisées dans l'espace de représentation des transformations pour mise en correspondance de l'instance d'objet avec un modèle de cet objet à l'endroit précis correspondant à la transformation correcte ; dans ce cas, les informations d'invariance sont peu utiles, voire inutiles ;

- si au contraire le descripteur choisi décrit une zone ambiguë de l'instance d'objet, les correspondances impliquant ce descripteur ne seront pas nécessairement localisées à l'endroit de l'espace de représentation correspondant à la transformation correcte, mais également à au moins un autre endroit tout à fait prévisible d'après le motif d'invariance ; dans ce cas, les informations d'invariance s'avèrent importantes pour déterminer la transformation correcte ;

- au final, l'information utile d'identification de l'objet est présente soit dans l'espace paramétrique du descripteur choisi, soit dans le motif d'invariance, ceci étant d'autant plus vrai lorsque le motif d'invariance est obtenu à l'aide précisément du descripteur choisi.

Il convient de noter que le choix du descripteur n'est pas anodin. Il peut permettre de mettre en exergue une forme ou un défaut particulier. On peut ainsi choisir un descripteur qui est invariant partout sauf sur une partie d'un objet considéré. L'information utile est alors conservée directement par la complémentarité entre l'ambiguïté du descripteur et le motif d'invariance obtenu avec ce descripteur. Par exemple, on peut détecter un trou dans une canette de boisson si le descripteur est adapté pour décrire la courbure locale en chaque point de la canette parce que le trou se manifeste par un défaut dans la courbure qui serait sinon uniforme.

Il convient également de noter que le descripteur choisi ne se limite pas à un descripteur du même type que celui du document WO 2020/201392, ni même plus généralement à un descripteur local ou de surface. Par exemple, un certain nombre de méthodes connues comparent la représentation d'une instance d'objet à une base de données de différents rendus d'un modèle de cet objet par appariement (de l'anglais « template matching »), soit explicitement, soit implicitement au travers d'un réseau de neurones ou via toute autre méthode équivalente d'intelligence artificielle par apprentissage statistique. Les représentations apprises ou les rendus de modèles utilisés peuvent eux aussi être considérés comme des descripteurs au sens de la présente invention puisqu'ils décrivent l'objet d'une certaine façon et sont aptes à fournir des hypothèses de poses par mise en correspondance. Dans ce cas, les différentes versions d'un modèle d'objet utilisées pour obtenir son motif d'invariance sont avantageusement les différents points de vues précités. D'autres méthodes connues permettent des recalages par détection de contours et peuvent impliquer des descripteurs au sens large.

Dans l'exemple des figures 1, 2 et 3, les étapes 108, 110, 112, 114 et 116 sont réalisées par exécution du deuxième programme 68 pour chaque modèle d'objet 22, 24, 26 de l'ensemble 20.

L'obtention de jeux de paramètres de transformation en translation, rotation et éventuellement changement d'échelle pour des mises en correspondance tridimensionnelle respectives de points représentatifs sélectionnés d'instances d'objets dans la scène tridimensionnelle 30 avec leurs dispositions dans l'un des modèles de l'ensemble 20 telle que mise en œuvre par la deuxième phase 200 comporte une première étape 202 qui est exécutée sur les mêmes principes que l'étape 108 et comme enseigné par exemple dans le document WO 2020/065177 A1. Cette première étape 202 suppose que la boucle d'étapes 102, 104 et 106 ait été appliquée en ligne à la scène tridimensionnelle 30 qui inclut les instances d'objets 32, 34, 36, 38, 40, 42 et hors ligne à chaque modèle d'objet 22, 24, 26 de l'ensemble 20 à l'aide du descripteur choisi. Chaque jeu de paramètres de transformation en translation et rotation obtenu est avantageusement associé à un indice de confiance (nombre réel positif par exemple compris entre 0 et 1) indiquant la qualité et/ou la robustesse de la mise en correspondance.

Suite à l'étape 202, la deuxième phase d'obtention de jeux de paramètres de transformation entre la scène tridimensionnelle 30 et l'ensemble 20 peut comporter une deuxième étape 204 de changement de repère analogue à l'étape 110 pour l'expression de chaque jeu de paramètres de transformation sous la forme d'un vecteur dans un espace de représentation par exemple identique à celui choisi à l'étape 110 selon l'enseignement du document WO 2020/065177 A1.

La troisième phase 300 comporte une étape 302 de regroupement automatique des vecteurs de transformation obtenus à l'issue de la deuxième phase 200. Cette étape 302 est similaire à l'étape 112 et peut être exécutée conformément à l'enseignement du document WO 2020/065177 A1 ou à celui de la figure 8.

Compte tenu des invariances potentielles de chacun des objets dont les instances sont à détecter et localiser dans la scène tridimensionnelle 30, il est tout à fait possible d'obtenir plusieurs vecteurs de transformations éloignés les uns des autres dans l'espace de représentation choisi pour une même instance d'objet associée à un même modèle d'objet de l'ensemble 20 à l'issue de la phase 200. Il est par conséquent tout à fait possible d'obtenir plusieurs groupes de transformations pour une même instance d'objet associée à un même modèle d'objet de l'ensemble 20 à l'issue de la phase 300. En fait, il est même logique de retrouver le motif d'invariance, que ce soit avant ou après regroupement 112, à une déformation près qui est celle d'une transformation nécessaire pour passer de l'instance d'objet dans la scène tridimensionnelle 30 à son modèle dans l'ensemble 20, dans l'espace de représentation des vecteurs de transformation ou des groupes obtenus à l'issue de la phase 200 ou 300 respectivement. Il en résulte une dispersion de l'information permettant de détecter et localiser les instances d'objets.

C'est donc l'objet de la quatrième phase 400 que de sélectionner, pour chaque instance d'objet, un unique groupe parmi le(s) groupe(s) obtenu(s) pour cette instance d'objet et son modèle par mise en œuvre de la troisième phase, en exploitant avantageusement les informations d'invariance fournies par mise en œuvre de la première phase. Cette sélection implique de regrouper les différents groupes résultant d'un même motif d'invariance en un même méta-groupe (de l'anglais « meta-cluster »).

A cet effet, la quatrième phase de sélection 400 comporte une première étape 402 d'initialisation au cours de laquelle N vecteurs de transformation $V_i$, $1 \leq i \leq N$, et N scores correspondants $S_i$, $1 \leq i \leq N$, sont récupérés de la troisième phase 300. Chaque vecteur $V_i$ est par exemple représentatif de l'un des N groupes obtenus à l'issue de la phase 300 et est considéré comme non neutralisé. Au cours de cette étape, un rayon de recherche est prédéterminé, par exemple la valeur RS précitée.

Au cours d'une étape suivante 404, le procédé teste s'il reste au moins un vecteur de transformation non neutralisé. Si c'est le cas, il passe à une première boucle d'étapes 406 à 420 destinée à être exécutée pour chacun des vecteurs de transformation non neutralisés sélectionnés les uns après les autres.

L'étape 406 consiste à tester s'il reste au moins un vecteur de transformation non neutralisé à sélectionner. Si c'est le cas, le procédé passe à une étape 408 de sélection d'un vecteur V de transformation non neutralisé sélectionnable et d'initialisation d'un score aggloméré pour ce vecteur V à a=0. Soit T la transformation associée à ce vecteur V. Le procédé passe ensuite à une deuxième boucle d'étapes 410 à 418, dans la première boucle d'étapes 406 à 420, destinée à être exécutée pour chacun des vecteurs de transformation non neutralisés autres que le vecteur sélectionné V.

L'étape 410 consiste à tester s'il reste au moins un vecteur de transformation non neutralisé autre que celui déjà sélectionné à sélectionner. Si c'est le cas, le procédé passe à une étape 412 de sélection d'un vecteur V' de transformation non neutralisé autre que celui déjà sélectionné. Soit T' la transformation associée à ce vecteur V'. Au cours de l'étape 412 également, la transformation $U = T^{-1}.T'$ est calculée.

Au cours d'une étape 414 suivante, le vecteur de transformation correspondant à la transformation U est placé dans l'espace de représentation des motifs d'invariance canoniques calculés à l'étape 110 (ou à l'étape 112 après regroupement le cas échéant). En effet, la transformation $T^{-1}$ permet de redresser le motif courant dans l'espace canonique de représentation des transformations possibles du modèle sur lui-même par invariance.

L'étape 416 suivante est donc une étape de test destinée à déterminer si le vecteur de transformation correspondant à la transformation U a un voisin à une distance inférieure ou égale à RS dans l'espace de représentation du motif d'invariance du modèle d'objet considéré. Si ce n'est pas le cas, le procédé retourne à l'étape 410 pour la sélection d'un autre vecteur de transformation V'.

Si au contraire c'est le cas, le procédé passe à une étape 418 de mise à jour du score aggloméré a de V : on ajoute à a le score S' associé au vecteur V'. Le procédé retourne alors à l'étape 410 pour la sélection d'un autre vecteur de transformation V'.

Lorsque tous les vecteurs de transformation non neutralisés V' autres que le vecteur V déjà sélectionné ont été sélectionnés tour à tour pour l'exécution de la deuxième boucle d'étapes 410 à 418, l'étape 410 oriente le procédé vers une étape 420 au cours de laquelle le score aggloméré a de V est mis à jour une dernière fois : on le multiplie par le score S associé au vecteur V. Ce vecteur V n'est alors plus sélectionnable dans la première boucle d'étapes 406 à 420 et le procédé retourne à l'étape 406.

Lorsque tous les vecteurs de transformation non neutralisés ont été sélectionnés et ont obtenu un score aggloméré a, l'étape 406 oriente le procédé vers une étape 422 au cours de laquelle le vecteur de transformation non neutralisé présentant le score aggloméré a le plus élevé est sélectionné. Un nouveau méta-groupe est créé et le vecteur de transformation V sélectionné en est le représentant avec le score a.

Au cours d'une étape 424 suivante, le vecteur de transformation V sélectionné à l'étape 422 est neutralisé et tous les vecteurs V' ayant contribué à augmenter son score aggloméré a à l'étape 418 sont neutralisé également. Le procédé retourne alors à l'étape 404.

Lorsque tous les vecteurs de transformation sont neutralisés, l'étape 404 dirige le procédé vers une dernière étape 426 de la quatrième phase 400. Cette dernière étape fournit les nouveaux méta-groupes résultant du regroupement des groupes issues de la troisième phase 300 selon le motif d'invariance de chaque modèle de l'ensemble 20 et la sélection d'un unique groupe dans chaque méta-groupe, celui présentant le meilleur score aggloméré. Ce score aggloméré augmente la confiance que l'on peut avoir dans la détection et la localisation de l'instance d'objet concernée.

La quatrième phase a été décrite comme étant exécutée sur les vecteurs de transformation représentatifs des groupes issus de la troisième phase 300, mais elle pourrait aussi être exécutée sur les vecteurs de transformation issus de la deuxième phase 200, c'est-à-dire avant regroupement. Cela augmente les temps de calcul mais est susceptible de produire de meilleurs résultats.

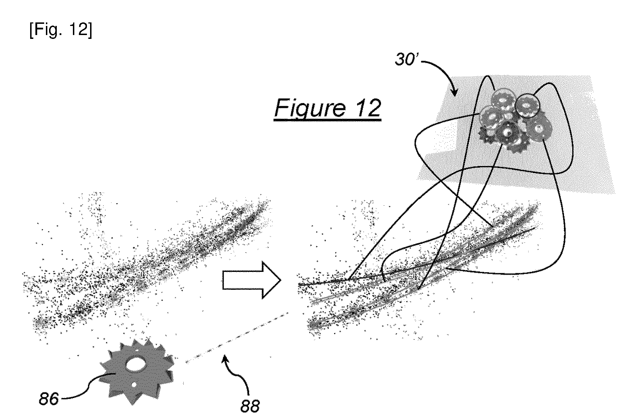

Un exemple de résultat de cette quatrième phase est illustré sur la figure 12. Il s'agit d'une scène tridimensionnelle 30' dans laquelle sont disposées plusieurs instances d'un même objet correspondant au modèle d'objet circulaire cranté 86 représenté avec son modèle d'invariance 88.

Le sous-espace de représentation des rotations des vecteurs de transformations est illustré en partie gauche de la figure 12 avant regroupement 400 des groupes en méta-groupes. On y distingue cependant des allures courbées représentant, par déformation du motif d'invariance 88 par transformation du référentiel de la scène 30' vers celui du modèle 86, différents motifs d'invariance correspondant chacun à l'une des instances d'objets de la scène 30'. Ces courbes sont clairement illustrées pour matérialiser les regroupements en partie droite de la figure 12. Chacune d'elle est associée à une instance d'objet et propose plusieurs transformations possibles compte tenu des invariances du modèle d'objet 86. Pour chacune d'elle, une transformation privilégiée est sélectionnée, i.e. celle dont le vecteur de transformation est associé au score aggloméré le plus élevé. Dans l'exemple du modèle d'objet 86, deux transformations sont susceptibles d'être privilégiées parmi les douze possibles pour chaque instance d'objet puisqu'il présente une vraie symétrie à 180°.

La cinquième phase 500 comporte une étape 502 de vérification et de raffinement de la ou des transformations déterminées par les phases précédentes. Il s'agit d'une vérification avec raffinement bien connue de l'homme du métier qui ne sera pas détaillée. Elle met par exemple en œuvre la méthode appelée ICP (de l'anglais « Iterative Closest Point ») qui aboutit à une très bonne convergence locale, mais dépend très fortement des données d'initialisation. C'est pour cela qu'elle est souvent retenue pour être exécutée lors de cette phase optionnelle de vérification et de raffinement. De manière optionnelle et connue de l'homme du métier, cette cinquième phase peut faire intervenir des critères tels que la visibilité prévisible de certaines parties d'instances d'objets en fonction de leur localisation telle que déterminée et de la disposition connue du capteur.

Enfin, la sixième phase 600, exécutée de façon optionnelle pour affiner ou remettre en question la sélection de groupe(s) de la quatrième phase 400, vise à tirer profit du calcul d'un score désambiguïsant, par exemple celui du score de potentiel désambiguïsant de l'étape 114. Elle n'a de réel intérêt que pour les objets dont les modèles possèdent des symétries fortes mais pas totales (tels que le modèle d'objet circulaire cranté 86, par exemple, en ce qui concerne les dix pseudo-symétries circulaires à 30°), des « défauts » ou détrompeurs (tels que le modèle de réglette 84 par exemple). En d'autres termes, elle n'est vraiment utile que si le motif d'invariance du modèle considéré présente plusieurs groupes à l'issue de l'étape 112 de regroupement de la phase d'identification et si l'exécution de l'étape 114 révèle des particularités à fort score de potentiel désambiguïsant dans ce modèle. Ainsi, dans l'exemple du modèle d'objet circulaire cranté 86, l'une des rotations successives de 30° autres que les deux symétries à 180° pourrait être sélectionnée par erreur à l'issue de la quatrième phase 400 pour la détection et localisation d'une instance de cet objet étant donné que le descripteur n'est pas nécessairement très précis. La sixième phase 600 permet alors de corriger cette erreur éventuelle en fournissant un nouveau score. Cependant, elle peut aussi être exécutée sans causer de problèmes sur les objets dont les modèles sont pleinement symétriques ou au contraire sans symétries.

Au cours d'une première étape 602 de cette sixième phase 600, un méta-groupe fourni en sortie de la quatrième phase 400 et éventuellement raffiné par exécution de la cinquième phase 500, ou fourni en sortie de la troisième phase 300 et éventuellement raffiné par exécution de la cinquième phase 500, et relatif à une instance d'objet dont le modèle présente des ruptures de symétries est sélectionné avec la transformation T, de l'ensemble 20 de modèles vers la scène tridimensionnelle 30, qui le représente, c'est-à-dire celle du groupe qui présente le meilleur score aggloméré. Au cours de cette même étape, les transformations T' du motif d'invariance du modèle considéré, telles qu'obtenues après le regroupement 112, sont répertoriées.

Ensuite, au cours d'une étape de test 604, on vérifie s'il reste encore une transformation T' à sélectionner parmi les transformations répertoriées à l'étape précédente. Si oui, le procédé passe à une étape 606 d'application de la transformation T.T' au modèle d'objet considéré.

Au cours d'une étape suivante 608, le procédé calcule un score quantifiant à quel point le modèle transformé par T.T' correspond à l'instance d'objet considérée dans la scène tridimensionelle observée. Ce score est par exemple basé sur une distance entre chaque point du modèle transformé par T.T' dans la scène observée, ou chaque point visible du modèle, et le point le plus proche de l'instance d'objet considérée dans la scène observée, éventuellement pondérée par la valeur absolue du cosinus de l'angle des normales en ces points. Plus généralement, ce score peut porter sur des particularités selon des méthodes similaires à celles exposées pour l'étape 114.

Au cours d'une étape 610 suivante, ce score peut être amplifié dans les zones les plus désambiguïsantes du modèle d'objet en pondérant ces distances par les scores de potentiel désambiguïsant calculés à l'étape 114. C'est-à-dire que les différences sont amplifiées autours des éléments les plus désambiguïsant de l'objet, ceux qui rompent ses symétries ou invariances. Le procédé retourne alors à l'étape 604 pour la sélection éventuelle d'une nouvelle transformation T'.

Si à l'étape 604 il ne reste plus de transformation T' à sélectionner, le procédé passe à une étape finale 612 de sélection de la transformation T.T' qui présente le meilleur score. La transformation T est alors remplacée par la transformation T.T'. Si T' est l'identité, transformation toujours présente dans le motif d'invariance d'un modèle d'objet, cela signifie que la transformation T qui a été sélectionnée pour le méta-groupe considéré à l'issue de la quatrième phase 400 est confirmée. Sinon, cela signifie qu'il s'agit d'une remise en question de la transformation T par exploitation d'un détail désambiguïsant qui n'a pas été correctement exploité, ou qui n'était peut-être pas exploitable, au cours de la quatrième phase 400 ou de la troisième phase 300.

La phase 600 apparaît ainsi comme une analyse à un ordre supérieur à celui de la quatrième phase 400, ou de la troisième phase 300, pour la localisation des instances d'objets. En d'autres termes, l'échelle de description utilisée pour une localisation d'instance d'objet dans une scène est généralement relativement importante au regard de petits détails tels que des détrompeurs ou autres « défauts » briseurs de symétries. L'exécution successive des phases 400 et 600, ou 300 et 600, permet de découpler l'échelle de description utilisée pour localiser l'instance d'objet et celle utilisée pour exploiter les détails susceptibles de remettre en question cette localisation. Ce découplage est d'autant plus intéressant qu'il peut s'avérer avantageux de choisir un descripteur insensible aux détails, notamment pour réduire l'influence du bruit de capteur. L'exécution de la sixième phase permet alors d'examiner des détails inférieurs au bruit de capteur.

Il apparaît clairement qu'un procédé/système tel que celui décrit précédemment permet d'intégrer automatiquement les invariances et symétries d'un objet dans sa description sans connaissance a priori sur ces dernières, sans hypothèse particulière pour leur analyse et sans contraintes sur leur nature. En effet, les informations d'invariance obtenues n'ont pas besoin d'être analysées, à part un éventuel regroupement ou modélisation automatique, pour être exploitables. Contrairement à ce qui est connu de l'état de la technique, elles ne sont ni traitées à part pour d'autres objectifs, ni écartées.

Cette identification améliorée de l'objet permet d'envisager de meilleures localisations d'instances d'objets dans des scènes tridimensionnelles mais également une meilleure détection de leurs défauts ou détails détrompeurs, en rupture de symétrie, lorsqu'elle est notamment complétée par des calculs de scores de potentiel désambiguïsant tels que proposés précédemment.

Elle permet aussi de compenser les faiblesses et imperfections d'un descripteur, quel qu'il soit, en fournissant une information complémentaire de ce dernier. Par exemple, un descripteur pour lequel il existe une incertitude dans la fiabilité de détermination des référentiels locaux sur lesquels il s'applique impliquera un reflet de cette incertitude dans les informations d'invariance résultantes, notamment par duplication de groupes en cas d'ambiguïté sur l'orientation de la normale à une surface. Plus généralement, cette identification améliorée permet de simplifier le descripteur utilisé sans perte d'information.

Par ailleurs, lorsque des déformations ou articulations possibles d'un modèle d'objet sont prises en compte dans l'élaboration de son motif d'invariance, cela renforce la robustesse de la détection et localisation des instances d'objets déformables.

On notera par ailleurs que l'invention n'est pas limitée au mode de réalisation décrit précédemment. Il apparaîtra en effet à l'homme de l'art que diverses modifications peuvent y être apportées à la lumière de l'enseignement qui vient de lui être divulgué. Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

**Revendications**

1. Procédé (100, 200, 300, 400, 500, 600) de détection et de localisation tridimensionnelle d'une instance (32, 34, 36, 38, 40, 42) d'un objet dans des données de représentation d'une scène tridimensionnelle réelle (30) par comparaison avec un modèle (22, 24, 26) de l'objet dans des données de représentation d'une scène de référence (20) incluant ce modèle, ce procédé impliquant une capture préalable à l'aide d'un capteur 3D (80) de la scène tridimensionnelle réelle (30) incluant l'instance d'objet (32, 34, 36, 38, 40, 42) à détecter et localiser pour l'obtention des données de représentation sous la forme d'un nuage tridimensionnel de points ou de données pouvant être converties en un nuage tridimensionnel de points, ce procédé étant implémenté par ordinateur et comportant les étapes suivantes :

   - identification (100), à l'aide d'un descripteur, de l'instance d'objet (32, 34, 36, 38, 40, 42) par :

      • sélection (102) d'au moins un point représentatif de l'instance d'objet (32, 34, 36, 38, 40, 42) dans les données de représentation,
      • calcul (106) d'une pluralité de valeurs identifiantes prises par des paramètres (60) du descripteur pour chaque point représentatif sélectionné,
      • ajout (106) des valeurs identifiantes calculées en chaque point représentatif sélectionné à des données d'identification de l'instance d'objet,
      • recherche (108, 110, 112, 114) d'au moins une invariance par transformation en translation et/ou en rotation d'au moins un modèle (22, 24, 26) de l'objet dans les données de représentation de ladite au moins une scène de référence (20), pour l'obtention d'informations d'invariance relatives à chaque invariance trouvée, et
      • ajout (116) desdites informations d'invariance aux données d'identification de l'instance d'objet ;

   - obtention (200) de jeux de paramètres de transformation en translation et rotation pour des mises en correspondance tridimensionnelle respectives de chaque point représentatif de l'instance d'objet dans la scène tridimensionnelle avec une disposition possible de ce point représentatif dans le modèle ;
   - regroupement automatique (300) desdits jeux de paramètres de transformation, chaque groupe éventuellement obtenu étant représentatif d'un unique jeu de paramètres de transformation pour une mise en correspondance de l'instance d'objet avec son modèle ; et
   - sélection (400, 600) d'un unique groupe parmi le(s) groupe(s) obtenu(s) à l'aide des informations d'invariance.

2. Procédé de détection et de localisation tridimensionnelle (100, 200, 300, 400, 500, 600) selon la revendication 1, dans lequel :

   - la recherche (108, 110, 112, 114) d'au moins une invariance comporte les étapes suivantes :

      • obtention (108) de jeux de paramètres de transformation en translation et rotation pour une mise en correspondance tridimensionnelle respective d'au moins un point représentatif d'un premier modèle de l'objet dans des données de représentation d'une première scène de référence incluant ce premier modèle avec au moins un point représentatif d'un deuxième modèle de l'objet dans des données de représentation d'une deuxième scène de référence incluant ce deuxième modèle, à l'aide desdits paramètres du descripteur, et
      • expression (110) de chaque jeu de paramètres de transformation dans un système de coordonnées à plusieurs dimensions incluant au moins une dimension pour la translation et au moins une dimension pour la rotation, pour l'obtention d'un motif d'invariance de l'objet ; et

   - l'ajout (116) desdites informations d'invariance comporte l'ajout du motif d'invariance obtenu aux données d'identification de l'instance d'objet.

3. Procédé de détection et de localisation tridimensionnelle (100, 200, 300, 400, 500, 600) selon la revendication 2, dans lequel l'obtention (108) des jeux de paramètres de transformation en translation et rotation est réalisée à l'aide desdits paramètres (60) du descripteur dont les valeurs sont calculées respectivement en chaque point représentatif des premier et deuxième modèles.

4. Procédé de détection et de localisation tridimensionnelle (100, 200, 300, 400, 500, 600) selon la revendication 2 ou 3, dans lequel la recherche (108, 110, 112, 114) d'au moins une invariance comporte en outre un regroupement automatique (112) desdits jeux de paramètres de transformation, chaque groupe éventuellement obtenu étant représentatif d'une invariance par translation et/ou rotation de l'objet et d'un unique jeu de paramètres de transformation pour une mise en correspondance du premier modèle de l'objet avec le deuxième modèle de l'objet.

5. Procédé de détection et de localisation tridimensionnelle (100, 200, 300, 400, 500, 600) selon l'une quelconque des revendications 2 à 4, dans lequel :

   - les données de représentation du deuxième modèle de l'objet dans la deuxième scène de référence sont obtenues par ajout d'un bruit prédéterminé dans les données de représentation du premier modèle de l'objet dans la première scène de référence ; et/ou
   - le deuxième modèle de l'objet tel que représenté dans la deuxième scène de référence résulte d'une déformation et/ou d'une transformation en translation et/ou rotation du premier modèle de l'objet tel que représenté dans la première scène de référence.

6. Procédé de détection et de localisation tridimensionnelle (100, 200, 300, 400, 500, 600) selon l'une quelconque des revendications 1 à 5, dans lequel un score de potentiel désambiguïsant est calculé (116) en au moins une zone dudit au moins un modèle de l'objet par combinaison de scores d'invariance calculés pour chaque invariance trouvée dans cette zone.

7. Procédé de détection et de localisation tridimensionnelle (100, 200, 300, 400, 500, 600) selon l'une quelconque des revendications 1 à 6, dans lequel la sélection (400, 600) d'un unique groupe, parmi le(s) groupe(s) obtenu(s) à l'aide des informations d'invariance, comporte la prise en compte (600) d'un score désambiguïsant pour chaque mise en correspondance de l'instance d'objet avec son modèle.

8. Programme d'ordinateur (66, 68, 70, 72, 74, 76, 78) téléchargeable depuis un réseau de communication et/ou enregistré sur un support (64) lisible par ordinateur (52) et/ou exécutable par un processeur (62), **caractérisé en ce qu'**il comprend des instructions pour l'exécution des étapes d'un procédé de détection et de localisation tridimensionnelle (100, 200, 300, 400, 500, 600) selon l'une quelconque des revendications 1 à 7, lorsque ledit programme est exécuté sur un ordinateur ayant reçu des données de représentation, sous la forme d'un nuage tridimensionnel de points ou de données pouvant être converties en un nuage tridimensionnel de points, obtenues par capture préalable à l'aide d'un capteur 3D (80) d'une scène tridimensionnelle réelle (30) incluant une instance d'objet (32, 34, 36, 38, 40, 42) à détecter et localiser.

9. Système (50) de détection et de localisation tridimensionnelle d'une instance (32, 34, 36, 38, 40, 42) d'un objet dans des données de représentation d'une scène tridimensionnelle réelle (30) à l'aide d'un descripteur, le système comportant :

   - un capteur 3D (80) pour une capture préalable de la scène tridimensionnelle réelle (30) incluant l'instance d'objet (32, 34, 36, 38, 40, 42) à détecter et localiser pour l'obtention des données (56) de représentation sous la forme d'un nuage tridimensionnel de points ou de données pouvant être converties en un nuage tridimensionnel de points ;
   - au moins une mémoire (54) de stockage des données (56) de représentation de la scène tridimensionnelle (30), de paramètres (60) du descripteur et de données (58) de représentation d'au moins une scène de référence (20) incluant au moins un modèle (22, 24, 26) de l'objet ; et
   - un processeur (62) de détection et de localisation tridimensionnelle de l'instance d'objet dans la scène tridimensionnelle, programmé pour l'exécution des étapes d'un procédé (100, 200, 300, 400, 500, 600) de détection et de localisation tridimensionnelle selon l'une quelconque des revendications 1 à 7.

**Patentansprüche**

1. Verfahren (100, 200, 300, 400, 500, 600) zur dreidimensionalen Erkennung und Ortung einer Instanz (32, 34, 36, 38, 40, 42) eines Objekts in Darstellungsdaten einer realen dreidimensionalen Szene (30) durch Vergleich mit einem Modell (22, 24, 26) des Objekts in Darstellungsdaten einer Referenzszene (20), die dieses Modell beinhaltet, wobei dieses Verfahren eine vorherige Erfassung mithilfe eines 3D-Sensors (80) der tatsächlichen dreidimensionalen Szene (30) beinhaltet, die die Objektinstanz (32, 34, 36, 38, 40, 42) zum Erkennen und Orten zum Erhalt der Darstellungsdaten in Form einer dreidimensionalen Punktwolke oder von Daten beinhaltet, die in eine dreidimensionale Punktwolke umgewandelt werden können, wobei dieses Verfahren computergestützt implementiert ist und die folgenden Schritte aufweist:

- Identifikation (100), mithilfe eines Deskriptors, der Objektinstanz (32, 34, 36, 38, 40, 42) durch:

  • Auswahl (102) mindestens eines Darstellungspunktes der Objektinstanz (32, 34, 36, 38, 40, 42) in den Darstellungsdaten,
  • Berechnung (106) einer Vielzahl von Identifikationswerten, die von Parametern (60) des Deskriptors für jeden ausgewählten Darstellungspunkt erfasst werden,
  • Hinzufügen (106) der an jedem ausgewählten Darstellungspunkt berechneten Identifikationswerte zu den Identifikationsdaten der Objektinstanz,
  • Suche (108, 110, 112, 114) nach mindestens einer Invarianz durch Transformation in Translation und/oder Rotation von mindestens einem Modell (22, 24, 26) des Objekts in den Darstellungsdaten der mindestens einen Referenzszene (20), zum Erhalt von Invarianzinformationen zu jeder gefundenen Invarianz, und
  • Hinzufügen (116) der Invarianzinformationen zu den Identifikationsdaten der Objektinstanz;

- Erhalt (200) von Transformationsparametersätzen in Translation und Rotation für die jeweilige dreidimensionale Zuordnung jedes repräsentativen Punktes der Objektinstanz in der dreidimensionalen Szene mit einer möglichen Anordnung dieses Darstellungspunktes in dem Modell;
- automatische Gruppierung (300) der Transformationsparametersätze, wobei jede eventuell erhaltene Gruppe repräsentativ für einen einzigen Transformationsparametersatz für eine Übereinstimmung der Objektinstanz mit ihrem Modell ist; und
- Auswahl (400, 600) einer einzelnen Gruppe aus der/den mithilfe der Invarianzinformationen erhaltenen Gruppe(n).

2. Verfahren zur dreidimensionalen Erkennung und Ortung (100, 200, 300, 400, 500, 600) nach Anspruch 1, wobei:

- die Suche (108, 110, 112, 114) nach mindestens einer Invarianz folgende Schritte aufweist:

  • Erhalt (108) von Transformationsparametersätzen in Translation und Rotation für eine jeweilige dreidimensionale Zuordnung von mindestens einem repräsentativen Punkt eines ersten Modells des Objekts in Darstellungsdaten einer ersten Referenzszene, die dieses erste Modell beinhaltet, mit mindestens einem repräsentativen Punkt eines zweiten Modells des Objekts in Darstellungsdaten einer zweiten Referenzszene, die dieses zweite Modell beinhaltet, mithilfe der Parameter des Deskriptors und
  • Ausdruck (110) jedes Transformationsparametersatzes in einem mehrdimensionalen Koordinatensystem, das mindestens eine Dimension für die Translation und mindestens eine Dimension für die Rotation beinhaltet, um ein Invarianzmuster des Objekts zu erhalten; und

- das Hinzufügen (116) der Invarianzinformationen weist das Hinzufügen des erhaltenen Invarianzmusters zu den Identifikationsdaten der Objektinstanz auf.

3. Verfahren zur dreidimensionalen Erkennung und Ortung (100, 200, 300, 400, 500, 600) nach Anspruch 2, wobei der Erhalt (108) der Transformationsparametersätze in Translation und Rotation mithilfe der Parameter (60) des Deskriptors durchgeführt wird, deren Werte an jedem Darstellungspunkt des ersten und zweiten Modells berechnet werden.

4. Verfahren zur dreidimensionalen Erkennung und Ortung (100, 200, 300, 400, 500, 600) nach Anspruch 2 oder 3, wobei die Suche (108, 110, 112, 114) nach mindestens einer Invarianz eine automatische Gruppierung (112) der Transformationsparametersätze aufweist, wobei jede eventuell erhaltene Gruppe repräsentativ für eine Invarianz durch Translation und/oder Rotation des Objekts und für einen einzigen Transformationsparametersatz für eine Übereinstimmung des ersten Modells des Objekts mit dem zweiten Modell des Objekts ist.

5. Verfahren zur dreidimensionalen Erkennung und Ortung (100, 200, 300, 400, 500, 600) nach einem der Ansprüche 2 bis 4, wobei:

- die Darstellungsdaten des zweiten Modells des Objekts in der zweiten Referenzszene durch Hinzufügen eines vorbestimmten Rauschens zu den Darstellungsdaten des ersten Modells des Objekts in der ersten Referenzszene erhalten werden; und/oder
- das zweite Modell des Objekts, wie in der zweiten Referenzszene dargestellt, aus einer Verformung und/oder einer Transformation in Translation und/oder Rotation des ersten Modells des Objekts hervorgeht, wie in der ersten Referenzszene dargestellt.

6.  Verfahren zur dreidimensionalen Erkennung und Ortung (100, 200, 300, 400, 500, 600) nach einem der Ansprüche 1 bis 5, wobei in mindestens einem Bereich des mindestens einen Modells des Objekts durch Kombination von berechneten Invarianzwerten für jede in diesem Bereich gefundene Invarianz ein eindeutiger Potenzialwert berechnet wird (116).

7.  Verfahren zur dreidimensionalen Erkennung und Ortung (100, 200, 300, 400, 500, 600) nach einem der Ansprüche 1 bis 6, wobei die Auswahl (400, 600) einer einzigen Gruppe, von der/den mithilfe der Invarianzinformationen erhaltenen Gruppe(n), die Berücksichtigung (600) eines Eindeutigkeitswertes für jede Übereinstimmung der Objektinstanz mit ihrem Modell aufweist.

8.  Computerprogramm (66, 68, 70, 72, 74, 76, 78), das aus einem Kommunikationsnetzwerk heruntergeladen und/oder auf einem von einem Computer (52) lesbaren und/oder von einem Prozessor (62) ausführbaren Medium (64) gespeichert werden kann, **dadurch gekennzeichnet, dass** es Anweisungen zur Durchführung der Schritte eines Verfahrens zur dreidimensionalen Erkennung und Ortung (100, 200, 300, 400, 500, 600) nach einem der Ansprüche 1 bis 7 umfasst, wenn das Programm auf einem Computer ausgeführt wird, der Darstellungsdaten, in Form einer dreidimensionalen Punktwolke oder von Daten empfangen hat, die in eine dreidimensionale Punktwolke umgewandelt werden können, die durch vorherige Erfassung mit einem 3D-Sensor (80) einer realen dreidimensionalen Szene (30) einschließlich einer Objektinstanz (32, 34, 36, 38, 40, 42) zum Erkennen und Orten erhalten wurden.

9.  System (50) zur dreidimensionalen Erkennung und Ortung einer Instanz (32, 34, 36, 38, 40, 42) eines Objekts in Darstellungsdaten einer realen dreidimensionalen Szene (30) mithilfe eines Deskriptors, wobei das System Folgendes auweist:

    - einen 3D-Sensor (80) für eine vorherige Erfassung der realen dreidimensionalen Szene (30), die die zu erkennende und zu ortende Objektinstanz (32, 34, 36, 38, 40, 42) zum Erhalt der Darstellungsdaten (56) in Form einer dreidimensionalen Punktwolke oder von Daten beinhaltet, die in eine dreidimensionale Punktwolke umgewandelt werden können;
    - mindestens einen Speicher (54) zum Ablegen von Daten (56) zur Darstellung der dreidimensionalen Szene (30), von Parametern (60) des Deskriptors und von Daten (58) zur Darstellung von mindestens einer Referenzszene (20), die mindestens ein Modell (22, 24, 26) des Objekts beinhaltet; und
    - einen Prozessor (62) zur dreidimensionalen Erkennung und Ortung der Objektinstanz in der dreidimensionalen Szene, der für die Durchführung der Schritte eines Verfahrens (100, 200, 300, 400, 500, 600) zur dreidimensionalen Erkennung und Ortung nach einem der Ansprüche 1 bis 7 programmiert ist.

**Claims**

1.  A method (100, 200, 300, 400, 500, 600) for three-dimensional detection and location of an instance (32, 34, 36, 38, 40, 42) of an object in representation data of a real three-dimensional scene (30) by comparison with a model (22, 24, 26) of the object in representation data of a reference scene (20) including this model, this method involving prior capture using a 3D sensor (80) of the real three-dimensional scene (30) including the object instance (32, 34, 36, 38, 40, 42) to be detected and located in order to acquire representation data in the form of a three-dimensional point cloud or data that can be converted into a three-dimensional point cloud, this method being implemented by computer and comprising the following steps:

    - identification (100), using a descriptor, of the object instance (32, 34, 36, 38, 40, 42) by:

        • selection (102) of at least one point representative of the object instance (32, 34, 36, 38, 40, 42) in the representation data,

• computation (106) of a plurality of identifying values taken by descriptor parameters (60) for each selected representative point,

• addition (106) of the computed identifying values at each selected representative point to identification data of the object instance,

• search (108, 110, 112, 114) of at least one invariance by translation and/or rotation transformation of at least one model (22, 24, 26) of the object in the representation data of said at least one reference scene (20), to acquire invariance information relating to each invariance found, and

• addition (116) of said invariance information to the identification data of the object instance;

- acquisition (200) of sets of translation and rotation transformation parameters for respective three-dimensional mappings of each representative point of the object instance in the three-dimensional scene with a possible arrangement of this representative point in the model;

- automatic clustering (300) of said sets of transformation parameters, each cluster possibly acquired being representative of a single set of transformation parameters for matching the object instance with its model; and

- selection (400, 600) of a single cluster from among the cluster(s) acquired using the invariance information.

2. The method for three-dimensional detection and location (100, 200, 300, 400, 500, 600) according to claim 1, wherein:

- the search (108, 110, 112, 114) of at least one invariance comprises the following steps:

• acquisition (108) of sets of translation and rotation transformation parameters for a respective three-dimensional mapping of at least one point representative of a first model of the object in representation data of a first reference scene including this first model with at least one point representative of a second model of the object in representation data of a second reference scene including this second model, using said descriptor parameters, and

• expression (110) of each set of transformation parameters in a multidimensional coordinate system including at least one dimension for translation and at least one dimension for rotation, to obtain an invariance pattern of the object; and

- the addition (116) of said invariance information involves adding the invariance pattern obtained to the object instance identification data.

3. The method for three-dimensional detection and location (100, 200, 300, 400, 500, 600) according to claim 2, wherein acquiring (108) the sets of translation and rotation transformation parameters is performed using said descriptor parameters (60), the values of which are computed respectively at each point representative of the first and second models.

4. The method for three-dimensional detection and location (100, 200, 300, 400, 500, 600) according to claim 2 or 3, wherein the search (108, 110, 112, 114) of at least one invariance further comprises automatic clustering (112) of said sets of transformation parameters, each cluster possibly obtained being representative of an invariance by translation and/or rotation of the object and of a single set of transformation parameters for matching the first model of the object with the second model of the object.

5. The method for three-dimensional detection and location (100, 200, 300, 400, 500, 600) according to any one of claims 2 to 4, wherein:

- the representation data of the second model of the object in the second reference scene is obtained by adding predetermined noise to the representation data of the first model of the object in the first reference scene; and/or

- the second model of the object as represented in the second reference scene results from a deformation and/or a translation and/or rotation transformation of the first model of the object as represented in the first reference scene.

6. The method for three-dimensional detection and location (100, 200, 300, 400, 500, 600) according to any of claims 1 to 5, wherein a disambiguating potential score is computed (116) in at least one area of said at least one model of the object by combining invariance scores computed for each invariance found in that area.

7. The method for three-dimensional detection and location (100, 200, 300, 400, 500, 600) according to any of claims 1 to 6, wherein the selection (400, 600) of a single cluster from among the cluster(s) obtained using the invariance information involves taking into account (600) a disambiguating score for each mapping of the object instance to its model.

8. A computer program (66, 68, 70, 72, 74, 76, 78) downloadable from a communication network and/or stored on a medium (64) readable by a computer (52) and/or executable by a processor (62), **characterized in that** it comprises instructions for executing the steps of a method for three-dimensional detection and location (100, 200, 300, 400, 500, 600) according to any of claims 1 to 7, when said program is executed on a computer that has received representation data, in the form of a three-dimensional point cloud or data that can be converted into a three-dimensional point cloud, obtained by prior capture using a 3D sensor (80) of a real three-dimensional scene (30) including an object instance (32, 34, 36, 38, 40, 42) to be detected and located.

9. A system (50) for three-dimensional detection and location of an instance (32, 34, 36, 38, 40, 42) of an object in representation data of a real three-dimensional scene (30) using a descriptor, the system comprising:

   - a 3D sensor (80) for preliminary capture of the real three-dimensional scene (30) including the object instance (32, 34, 36, 38, 40, 42) to be detected and located in order to obtain the representation data (56) in the form of a three-dimensional point cloud or data that can be converted into a three-dimensional point cloud;
   - at least one memory (54) for storing data (56) representing the three-dimensional scene (30), descriptor parameters (60), and data (58) representing at least one reference scene (20) including at least one model (22, 24, 26) of the object; and
   - a processor (62) for three-dimensional detection and location of the object instance in the three-dimensional scene, programmed to execute the steps of a method (100, 200, 300, 400, 500, 600) for three-dimensional detection and location according to any of claims 1 to 7.

[Fig. 1]

## Figure 1

[Fig. 2]

## Figure 2

[Fig. 3]

## Figure 3

[Fig. 4]

## Figure 4

[Fig. 5]

## Figure 5

[Fig. 6]

## Figure 6

[Fig. 7]

## Figure 7

[Fig. 8]

## Figure 8

[Fig. 9]

Figure 9

[Fig. 10]

Figure 10

84

[Fig. 11]

Figure 11

82

[Fig. 12]

Figure 12

30'

86

88

## RÉFÉRENCES CITÉES DANS LA DESCRIPTION

**Documents brevets cités dans la description**

- US 8830229 B2
- WO 2020201392 A1
- WO 2020065177 A1
- US 8411081 B2
- WO 2020201392 A

**Littérature non-brevet citée dans la description**

- **BESL et al.** A method for registration of 3-D shapes. *IEEE Transactions on Pattern Analysis and Machine Intelligence*, February 1992, vol. 14 (2), 239-356
- **ALEXANDROV et al.** Leveraging symmetries to improve object detection and pose estimation from range data. *Proceedings of International Conference on Computer Vison Systems*, 2019, 397-407